Europäisches Patentamt

European Patent Office

Office européen des brevets

(19)

(11) **EP 1 330 752 B1**

(12) **FASCICULE DE BREVET EUROPEEN**

(45) Date de publication et mention
de la délivrance du brevet:
**22.12.2004 Bulletin 2004/52**

(51) Int Cl.⁷: **G06F 17/60**, H04L 12/58

(21) Numéro de dépôt: **01978566.6**

(22) Date de dépôt: **18.10.2001**

(86) Numéro de dépôt international:
**PCT/FR2001/003229**

(87) Numéro de publication internationale:
**WO 2002/035408 (02.05.2002 Gazette 2002/18)**

(54) **PROCEDE ET SYSTEME DE GESTION DE L'ACCESSIBILITE DE L'ADRESSE ELECTRONIQUE D'UN TERMINAL LOCAL PAR UN OU PLUSIEURS TERMINAUX DISTANTS**

VERFAHREN UND SYSTEM ZUR VERWALTUNG DES ZUGANGS ZUR ELEKTRONISCHEN ADRESSE EINES LOKALEN TERMINALS DURCH EIN ODER MEHRERE ENTFERNTE TERMINALS

METHOD AND SYSTEM FOR MANAGING ACCESSIBILITY OF THE ELECTRONIC ADDRESS OF A LOCAL TERMINAL BY ONE OR SEVERAL REMOTE TERMINALS

(84) Etats contractants désignés:
**AT BE CH CY DE DK ES FI FR GB GR IE IT LI LU MC NL PT SE TR**

(30) Priorité: **26.10.2000 FR 0013730**

(43) Date de publication de la demande:
**30.07.2003 Bulletin 2003/31**

(73) Titulaire: **FRANCE TELECOM**
**75015 Paris (FR)**

(72) Inventeurs:
• **CATUDAL, Thierry**
**F-35770 Vern sur Seiche (FR)**

• **LINOT, Benoît**
**F-22690 Pleudihen sur Rance (FR)**

(74) Mandataire: **Hassine, Albert**
**Cabinet Plasseraud**
**65/67 rue de la Victoire**
**75440 Paris Cedex 09 (FR)**

(56) Documents cités:
**EP-A- 0 770 968**  **US-A- 5 493 692**
**US-A- 5 754 306**

**Description**

L'invention concerne un procédé et un système de gestion de l'accessibilité de l'adresse électronique d'un terminal local d'un utilisateur par un ou plusieurs terminaux distants, munis chacun d'une adresse électronique.

La multiplication des échanges de messages par communication en réseau, échange de messages de courrier électronique et/ou de messages d'accès ou de réponse suite à accès à des sites en réseau, tels que les réseaux étendus tel que le réseau INTERNET et/ou le cas échéant les réseaux locaux ou réseaux d'entreprise, encore désignés par réseaux INTRANET, pose, à l'heure actuelle, le problème crucial de l'accessibilité de tout terminal par un autre terminal.

En particulier, la notion d'accessibilité couvre, d'une part, la notion de disponibilité effective de l'utilisateur de ce terminal, vis-à-vis d'un ou plusieurs utilisateurs d'autres terminaux, et, d'autre part, la notion de compatibilité matérielle et/ou logicielle de ce terminal vis-à-vis d'autres terminaux.

En ce qui concerne la notion de disponibilité effective de l'utilisateur de ce terminal, cette notion recouvre la disponibilité de cet utilisateur compte tenu de ses obligations, professionnelles et/ou personnelles, de critères relationnels que cet utilisateur souhaite établir pour son système de messagerie électronique, au niveau de son terminal, vis-à-vis de certains de ses interlocuteurs, habituels ou non, amenés à émettre et/ou recevoir des messages électroniques vers ou à partir des terminaux distants munis chacun d'une adresse électronique. Compte tenu de la qualification de terminal distant de tout terminal d'un utilisateur interlocuteur de cet utilisateur, le terminal de ce dernier sera désigné par terminal local dans la présente demande de brevet lorsque la distinction entre terminal local et distant apparaîtra nécessaire.

En ce qui concerne la notion de compatibilité, entre terminaux, terminal local/terminal distant, la véritable explosion des types de terminaux mis sur le marché à la disposition des utilisateurs, compte tenu de leurs caractéristiques techniques et/ou fonctionnelles, pose le problème du respect de l'intégrité des messages reçus, voire de leur réception effective.

Ainsi, un terminal de téléphonie mobile ne peut guère, à l'heure actuelle, être considéré comme susceptible d'autoriser la réception de messages électroniques constitués par des pages HTML accompagnées de fichiers vidéo, sauf à prévoir l'adjonction de moyens d'affichage et d'interfaçage graphique.

Il en est de même, à un degré moindre toutefois, pour ce qui concerne les assistants électroniques, lesquels, vis-à-vis des ordinateurs portables encore appelés "*notebooks*" en langage anglo-saxon, et plus particulièrement, des ordinateurs de bureau, constituent des terminaux à capacités plus limitées.

A l'heure actuelle, compte tenu des observations précédentes, la réception, par un terminal local, de messages électroniques issus des terminaux distants les plus divers, se traduit par une réception tout ou rien par le terminal local, le cas échéant accompagnée de défaut d'intégrité de certains messages reçus, au moins pour ce qui concerne la restitution de ces messages.

En effet, les processus actuels de gestion de la messagerie électronique des terminaux ne permettent aucunement à l'utilisateur d'un terminal local de gérer sa disponibilité vis-à-vis de certains de ses interlocuteurs, utilisateurs de terminaux distants.

En outre, l'utilisateur de tout terminal local, lors de l'envoi de messages ou fichiers électroniques à des terminaux distants, ne peut prendre en compte les spécificités du terminal distant de certains de ses interlocuteurs, notamment en matière de compatibilité matérielle et/ou logicielle vis-à-vis de la nature et du contenu des messages électroniques transmis.

Le document US 5 754 306 A décrit un procédé pour envoyer des messages électroniques ou des télécopies, dans lequel un identifiant de l'utilisateur est mémorisé avec une information selon laquelle le destinataire souhaite recevoir le message sous la forme d'un courrier électronique, d'une télécopie, ou encore que le message soit stocké en mémoire pour une utilisation ultérieure. Ainsi, c'est l'utilisateur du système qui, à l'émission, gère les informations sur l'adresse électronique des destinataires.

La présente invention telle que définie dans les revendications a pour objet de remédier aux inconvénients des procédés et systèmes de gestion de messages électroniques de l'art antérieur, messages de courrier électronique d'accès et/ou de réponse à des sites en réseau, tels que les pages HTML et leurs fichiers d'accompagnement, par l'instauration d'un contrôle de l'accessibilité de tout terminal local vis-à-vis de terminaux distants, chaque terminal distant pouvant jouer le rôle d'un terminal local et réciproquement.

Un autre objet de la présente invention est, en conséquence, la mise en oeuvre d'un procédé et d'un système permettant à tout utilisateur d'un terminal, désigné par terminal local, de se déclarer facilement et temporairement ou définitivement disponible, et donc accessible, ou non disponible et donc non accessible, vis-à-vis de tout ou partie de ses interlocuteurs utilisateurs de terminaux distants.

Un autre objet de la présente invention est également la mise en oeuvre d'un procédé et d'un système permettant à tout utilisateur d'un terminal, désigné par terminal local, de notifier sa disponibilité, et donc son accessibilité, temporaire ou définitive, à tout ou partie de ses interlocuteurs utilisateurs de terminaux distants.

Un autre objet de la présente invention est enfin la mise en oeuvre d'un procédé et d'un système permettant à tout utilisateur d'un terminal, terminal local ou terminal distant, de prendre en compte, de manière sensiblement automatique, la compatibilité matérielle et/ou logicielle de tout terminal distant, respectivement local, et de conférer ainsi à toute transaction par envoi de message électronique entre ces terminaux une accessibilité optimale de terminal à terminal.

Le procédé de gestion de l'accessibilité de l'adresse électronique d'un terminal local d'un utilisateur par un ou plusieurs terminaux distants munis chacun d'une adresse électronique, objet de la présente invention, est remarquable en ce qu'il consiste à constituer l'ensemble des adresses électroniques de chaque terminal distant en au moins une liste d'adresses électroniques d'interlocuteurs de cet utilisateur, à subdiviser l'ensemble des adresses électroniques en groupes distincts d'adresses électroniques, à attribuer à chaque groupe distinct d'adresses électroniques une fonction d'accessibilité privilégiée spécifique choisie parmi une pluralité de fonctions d'accessibilité privilégiée, chaque fonction d'accessibilité privilégiée présentant un degré d'accessibilité différent du degré d'accessibilité des autres fonctions d'accessibilité de cette pluralité de fonctions d'accessibilité privilégiée, pour constituer des groupes d'adresses électroniques d'accessibilité privilégiée distincte.

Le système de gestion de l'accessibilité de l'adresse électronique du terminal local d'un utilisateur par un ou plusieurs terminaux distants munis chacun d'une adresse électronique, objet de l'invention, est remarquable en ce qu'il comporte un serveur interactif spécifique connecté en réseau avec ces terminaux. Le serveur interactif comporte au moins un module d'accès frontal permettant une connexion interactive de tout terminal local, une attribution reconfigurable, à au moins un groupe d'adresses électroniques de plusieurs terminaux distants, d'une fonction d'accessibilité privilégiée et de constituer au moins un groupe d'adresses électroniques de plusieurs terminaux distants d'accessibilité privilégiée à l'adresse électronique de ce terminal local. Un module de notification est prévu afin de notifier, d'une part, à tout terminal distant, dont l'adresse électronique appartient à l'ensemble des adresses électroniques constituant une liste d'adresses électroniques d'interlocuteurs de cet utilisateur et du terminal local de ce dernier, et, d'autre part, à tout terminal distant d'un interlocuteur potentiel, des messages de notification et de mise à jour de l'accessibilité actuelle de l'adresse électronique du terminal local par chaque terminal distant.

L'invention couvre en outre un terminal, local ou distant, muni d'une adresse électronique d'accès, ce terminal étant connecté à un réseau électronique auquel sont connectés des terminaux distants munis chacun d'une adresse électronique, ce terminal comportant au moins, mémorisés en mémoire spécifique, un ensemble d'adresses électroniques de chaque terminal distant constitué en au moins une liste d'adresses électroniques d'interlocuteurs de l'utilisateur de ce terminal, une pluralité de groupes distincts d'adresses électroniques, ces groupes distincts étant constitués à partir de cette liste d'adresses électroniques d'interlocuteurs de cet utilisateur de terminal, au moins une fonction d'accessibilité privilégiée spécifique choisie parmi une pluralité de fonctions d'accessibilité privilégiée, chaque fonction d'accessibilité privilégiée présentant un degré d'accessibilité différent du degré d'accessibilité de cette pluralité de fonctions d'accessibilité privilégiée, pour constituer des groupes d'adresses électroniques d'accessibilité privilégiée distincte à l'adresse électronique d'accès à ce terminal.

Le procédé et le système objets de l'invention trouvent application à la gestion de l'accessibilité de l'adresse électronique de terminaux de tout type.

En particulier, la notion d'adresse électronique couvre non seulement toute combinaison de caractère alphanumériques susceptibles de constituer l'adresse électronique d'accès en réseau, adresse IP, de tout terminal, mais également toute combinaison de digits susceptibles de constituer l'adresse électronique d'appel téléphonique de tout terminal de radiotéléphonie mobile, muni en outre ou non d'une adresse IP.

Le procédé, le système et le terminal permettant leur mise en oeuvre, conformément à l'objet de l'invention, seront mieux compris à la lecture de la description et à l'observation des dessins ci-après dans lesquels :

- la figure 1a représente, à titre illustratif, un organigramme général de mise en oeuvre du procédé de gestion de l'accessibilité de l'adresse électronique d'un terminal local par un ou plusieurs terminaux distants, conforme à l'objet de la présente invention ;
- la figure 1b représente, à titre illustratif, une variante de mise en oeuvre d'une étape d'exécution du procédé objet de l'invention tel qu'illustré en figure la ;
- la figure 1c représente, à titre illustratif, un organigramme général de mise en oeuvre d'une variante de mise en oeuvre du procédé objet de l'invention tel que représenté en figure 1a, cette variante de mise en oeuvre présentant une plus grande flexibilité d'utilisation pour l'utilisateur d'un terminal local ;
- la figure 1d représente, à titre illustratif, un détail de mise en oeuvre d'une étape d'exécution du procédé objet de l'invention tel que représenté en figure 1c ;
- les figures 2a à 2c représentent, à titre illustratif, un mode de réalisation préférentiel du procédé objet de l'invention dans lequel les groupes et sous-ensembles d'adresses électroniques auxquels une fonction d'accessibilité privilégiée est attribuée sont constitués dans un environnement très familier à l'utilisateur, sous forme de répertoires ou sous-répertoires encore désignés par dossiers ou sous-dossiers ;

- la figure 2d représente, à titre illustratif, un mode de mise en oeuvre d'attributs relatifs à l'utilisateur sous forme de carte d'identité électronique publique respectivement privée ;
- la figure 3a représente, à titre purement illustratif, l'architecture d'un système de gestion de l'accessibilité de l'adresse électronique d'un terminal local par une pluralité de terminaux distants conforme à l'objet de la présente invention ;
- la figure 3b représente, à titre illustratif, un détail de mise en oeuvre d'un module d'accès frontal constitutif d'un système de gestion tel que représenté en figure 3a ;
- la figure 3c représente, à titre illustratif, un organigramme des opérations essentielles réalisées par le système objet de la présente invention représenté en figures 3a et 3b ;
- la figure 4a représente, à titre illustratif, un protocole d'échangé de messages entre un terminal local et un terminal distant par l'intermédiaire d'un système objet de la présente invention, lorsque le terminal local constitué par un terminal de radiotéléphonie mobile est par exemple interconnecté par l'intermédiaire d'un réseau UMTS, lors d'une opération de connexion et de notification ;
- la figure 4b représente, à titre illustratif, un protocole d'échange de messages entre un terminal local et un terminal distant par l'intermédiaire d'un système objet de la présente invention, lorsque le terminal local constitué par un terminal de radiotéléphonie mobile est par exemple interconnecté par l'intermédiaire d'un réseau UMTS, lors d'une opération de modification de la liste des adresses électroniques, constituant la liste des interlocuteurs pour le terminal local ;
- la figure 4c représente, à titre illustratif, un protocole d'échange de messages entre un terminal local et un terminal distant par l'intermédiaire d'un système objet de la présente invention, lorsque le terminal local constitué par un terminal de radiotéléphonie mobile est par exemple interconnecté par l'intermédiaire d'un réseau UMTS, lors d'une opération de modification de l'accessibilité privilégiée au terminal local ;
- la figure 4d représente, à titre illustratif, un protocole d'échange de messages entre un terminal local et un terminal distant par l'intermédiaire d'un système objet de la présente invention, lorsque le terminal local constitué par un terminal de radiotéléphonie mobile est par exemple interconnecté par l'intermédiaire d'un réseau UMTS, lors d'une opération d'adjonction d'adresse électronique à la liste des interlocuteurs soumise à autorisation de l'interlocuteur considéré ;
- la figure 5a représente, à titre illustratif, un terminal de type ordinateur de bureau ou ordinateur portable, connecté à un réseau IP et permettant la mise en oeuvre du procédé et du système objets de la présente invention ;
- la figure 5b représente, à titre illustratif, un terminal de type terminal de radiotéléphonie mobile, connecté à un réseau UMTS ou GPRS, et permettant la mise en oeuvre du procédé et du système objets de la présente invention ;
- la figure 5c représente, à titre illustratif, un terminal de type terminal de radiotéléphonie mobile, connecté par exemple au réseau GPRS ou UMTS, et permettant d'assurer, grâce au procédé objet de l'invention, la gestion de l'adresse électronique et du numéro d'appel téléphonique d'un terminal distant muni ou non d'une adresse électronique ;
- la figure 5d représente, à titre illustratif, un organigramme de gestion conjointe du numéro d'appel téléphonique et de l'adresse électronique d'un terminal distant constitué par un terminal de radiotéléphonie mobile tel que représenté en figure 5c ;
- les figures 5e à 5i représentent différentes pages écrans affichées au niveau d'un terminal, terminal local ou distant, afin de permettre l'exécution du procédé objet de l'invention par tout utilisateur non averti à partir d'une interface graphique.

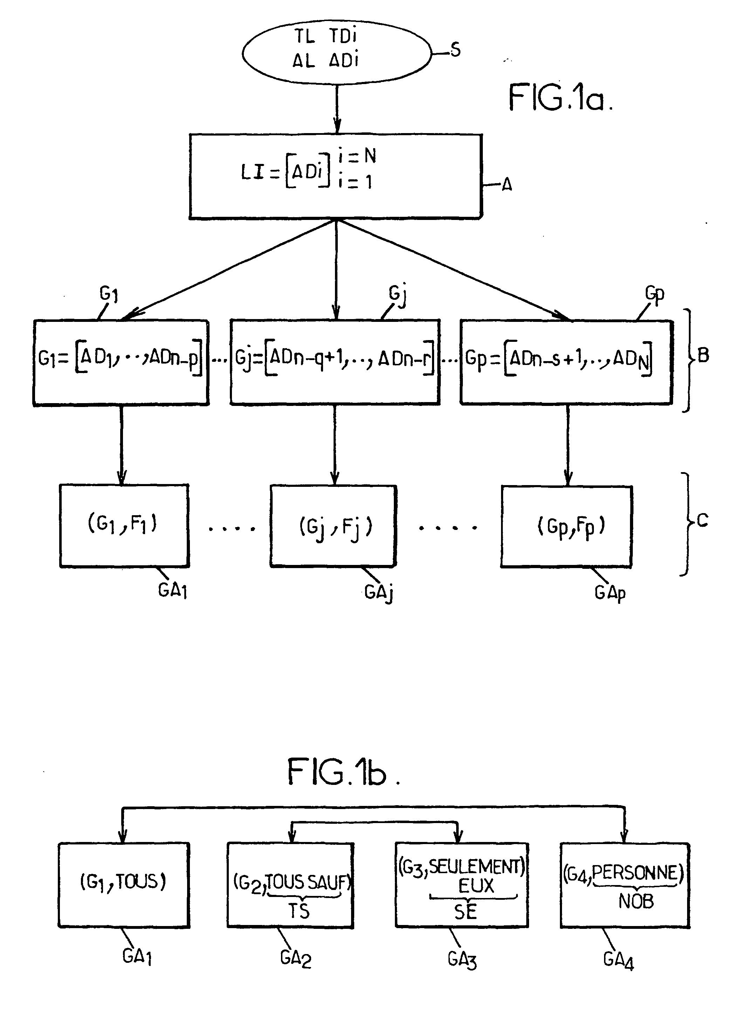

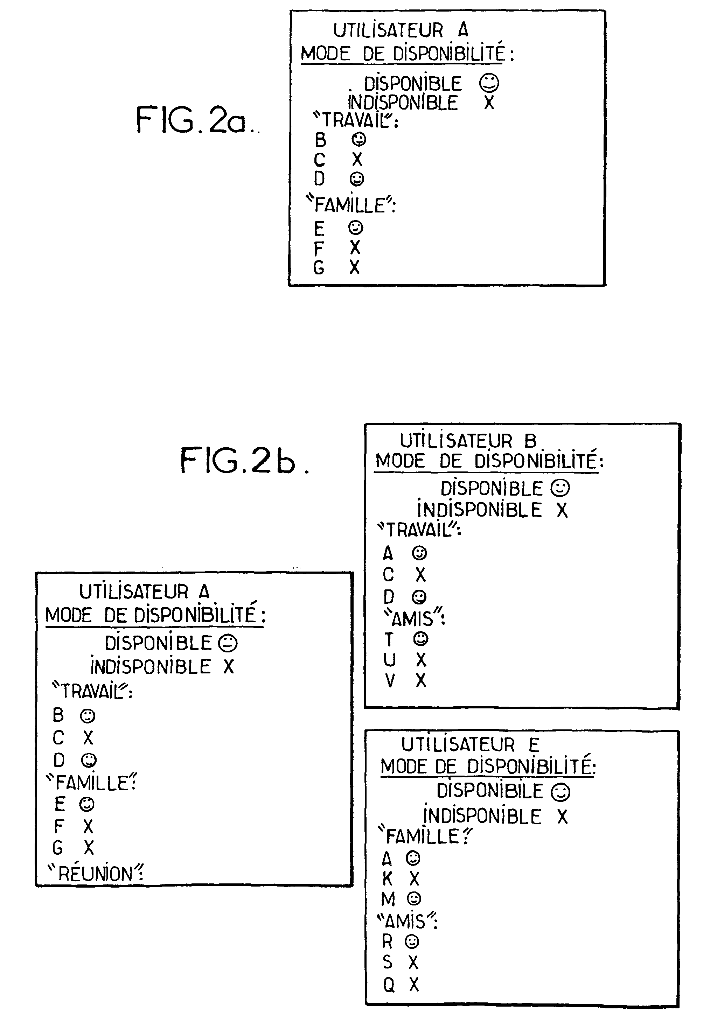

Une description plus détaillée du procédé de gestion de l'accessibilité de l'adresse électronique d'un terminal local d'un utilisateur par un ou plusieurs terminaux distants, munis chacun d'une adresse électronique, sera maintenant donné en liaison avec les figures 1a à 1d et 2a à 2c.

Ainsi que mentionné précédemment dans la description, un terminal est dit local par opposition à tout terminal dit distant lorsque ce terminal distant est le terminal d'un utilisateur interlocuteur de l'utilisateur du terminal local précité. En outre, on indique que, dans le cadre de la description de la présente demande de brevet, et en particulier du procédé et du système de gestion objets de l'invention, le terminal est dit local lorsque le procédé objet de la présente invention est mis en oeuvre à partir de ce terminal, ainsi qu'il sera décrit ci-après.

En conséquence, en référence à la figure 1a, on considère les étapes ou états successifs permettant la mise en oeuvre du procédé de gestion de l'accessibilité de l'adresse électronique d'un terminal local TL muni d'une adresse électronique, adresse IP désignée par AL, et d'une pluralité de terminaux distants, notés TDi, munis chacun d'une adresse électronique ADi à l'étape de départ S.

Compte tenu de l'étape de départ précitée, le procédé objet de l'invention consiste, en une étape A, à constituer l'ensemble des adresses électroniques de chaque terminal distant en au moins une liste, notée LI, d'adresses électroniques d'interlocuteurs de l'utilisateur du terminal local TL.

La liste précitée est notée :

$$LI = [ADi]_1^N$$

où ADi désigne l'adresse électronique de chaque terminal distant TDi. N désigne le nombre de terminaux distants dont les utilisateurs constituent les interlocuteurs de l'utilisateur du terminal local TL.

Par notion de liste, on entend en fait tout arrangement des adresses électroniques ADi des terminaux distants TDi sous forme de listes constituées et justifiant d'un traitement de liste conformément à la notion de liste selon la définition des langages de programmation de haut niveau, ou sous forme de fichiers pour lesquels un traitement en lecture permet de discriminer toute adresse ADi de rang i dans l'ensemble des N adresses constituant ce fichier.

L'étape A est alors suivie d'une étape B consistant à subdiviser l'ensemble des adresses électroniques précitées en groupes distincts d'adresses électroniques. Sur la figure 1a, les groupes sont notés $G_l$, ..., $G_j$, ..., $G_P$ où P désigne le nombre de groupes issus de l'opération de subdivision.

En ce qui concerne l'opération de subdivision précitée, on indique que celle-ci est laissée à la seule initiative de l'utilisateur du terminal local TL, ainsi qu'il sera décrit de manière plus détaillée ultérieurement dans la description.

Pour cette raison, le groupe $G_1$ est supposé contenir les adresses électroniques $AD_1$, ..., $AD_{n-p}$, le groupe de rang j, $G_j$, est réputé comporter les adresses $AD_{n-q+1}$, ..., $AD_{n-r}$ et le groupe $G_p$ est réputé comporter les adresses $AD_{n-s+1}$, ..., $AD_N$.
Dans les notations précédentes, on indique que n, p, q, r et s ont des valeurs quelconques, car l'opération de subdivision précitée est laissée à la seule initiative de l'utilisateur du terminal local TL.

L'étape B est alors elle-même suivie d'une étape C consistant à attribuer à chaque groupe distinct d'adresses électroniques une fonction d'accessibilité privilégiée spécifique, choisie parmi une pluralité de fonctions d'accessibilité privilégiée. Sur la figure 1a, les fonctions d'accessibilité privilégiée sont notées $F_1$, ..., $F_j$, ..., $F_P$.

D'une manière générale, on indique que chaque fonction d'accessibilité privilégiée présente un degré d'accessibilité différent du degré d'accessibilité des autres fonctions d'accessibilité privilégiée. Dans ces conditions, l'association, à l'étape C, d'une fonction d'accessibilité privilégiée à chaque groupe, l'opération d'association étant notée $(G_j, F_j)$, permet de constituer des groupes d'adresses électroniques d'accessibilité privilégiée distincts, ces groupes $(G_1,F_1)$, ..., $(G_j,F_j)$, ..., $(G_P,F_P)$ étant désignés par $GA_1$, $GA_j$, $GA_P$ respectivement.

D'une manière générale, on indique que les fonctions d'accessibilité $F_l$, $F_j$ à $F_P$, et, en conséquence, les groupes d'adresses électroniques d'accessibilité privilégiée correspondants $GA_1$, $GA_j$ à $GA_P$ peuvent correspondre à des fonctions logiques diverses permettant en fait à l'utilisateur du terminal local TL d'attribuer à tout ou partie de ses interlocuteurs un niveau d'accessibilité déterminé, en fonction notamment du degré de disponibilité dont l'utilisateur du terminal local TL dispose vis-à-vis de ces derniers.

Différents modes de réalisation des fonctions d'accessibilité $F_j$ précitées seront maintenant décrits en liaison avec la figure 1b.

Sur la figure 1b, on a décrit, de manière non limitative, quatre groupes d'adresses électroniques d'accessibilité privilégiée distincts $GA_1$, $GA_2$, $GA_3$ et $GA_4$.

Ainsi, le groupe $GA_1$ correspond à un groupe désigné par TOUS, TOUS désignant en fait la fonction d'accessibilité $F_1$ attribuée au groupe $G_1$, groupe pour lequel, à toutes les adresses électroniques appartenant au groupe $G_1$ est attribuée, par l'intermédiaire de la fonction $F_1$ d'accessibilité, une accessibilité sans restriction ni réserve à l'adresse électronique locale AL.

De même, le groupe $GA_2$ correspond à un groupe désigné par TOUS SAUF, où TOUS SAUF, désigné de manière abrégé par TS, correspond à une fonction d'accessibilité privilégiée $F_2$, groupe pour lequel, à toutes les adresses électroniques n'appartenant pas à ce groupe est attribuée, par l'intermédiaire de la fonction d'accessibilité $F_2$, TS, une accessibilité sans restriction ni réserve à l'adresse électronique locale AL.

Le groupe $GA_3$ correspond à un groupe dont la fonction d'accessibilité est une fonction SEULEMENT EUX, désignée en abrégé par SE, associée au groupe $G_3$, le groupe d'accessibilité privilégiée distinct $GA_3$ étant tel que, à toutes les adresses électroniques appartenant à ce groupe est attribuée, par l'intermédiaire de la fonction d'accessibilité SEULEMENT EUX, SE, une accessibilité sans restriction ni réserve à l'adresse électronique locale AL.

Le groupe $GA_4$ dont la fonction d'accessibilité est désignée par PERSONNE, ou encore NOB en abrégé, pour lequel, à toutes les adresses électroniques du groupe $G_4$ appartenant à ce groupe, n'est attribuée, par l'intermédiaire de la fonction d'accessibilité $F_4$, c'est-à-dire la fonction PERSONNE NOB, aucune accessibilité à l'adresse électronique locale AL.

On comprend ainsi qu'en fonction de l'attribution des fonctions d'accessibilité distinctes TOUS, TOUS SAUF TS, SEULEMENT EUX SE, ou PERSONNE NOB, aux différents groupes d'adresses électroniques $G_l$, $G_j$ à $G_P$ par l'utilisateur du terminal local, ce dernier peut ainsi moduler l'accessibilité au terminal local TL dont il dispose en fonction de son degré de disponibilité pour un ou plusieurs des terminaux distants d'adresse électronique ADi appartenant au groupe considéré. Cette modulation s'entend de la modulation de l'accessibilité en fonction des adresses électroniques de chaque terminal distant et, bien entendu, en fonction de la personne de l'utilisateur de chacun de ces terminaux distants, alors que dans l'exemple donné en figures 1a et 1b, on se limite pour l'instant à une accessibilité, c'est-à-dire à une disponibilité de l'utilisateur du terminal local TL correspondant à une accessibilité stricte ou à une non-accessibilité pour un degré de disponibilité à deux niveaux, disponible ou non disponible.

On indique bien entendu que la désignation des fonctions logiques précitées, TOUS, TOUS SAUF, TS, SEULEMENT EUX, SE, et PERSONNE, NOB, peut être affichée en clair à l'attention de l'utilisateur du terminal local TL, alors que de telles fonctions peuvent être mises en oeuvre à partir de prédicats de traitement de listes par exemple.

A titre d'exemple non limitatif, pour la mise en oeuvre de la fonction d'accessibilité TOUS SAUF, TS, la fonction d'accessibilité $F_2$ correspondante peut être obtenue, par exemple, par disjonction de la liste LI, comportant l'ensemble des adresses électroniques des terminaux distants ADi, et de l'ensemble des adresses électroniques du groupe d'adresses électroniques $G_2$ pour constituer une liste résultante d'adresses électroniques dans laquelle les adresses électroniques comprises dans le groupe $G_2$ ont été exclues, et à laquelle l'accessibilité sans restriction ni réserve à l'adresse électronique locale est attribuée, alors qu'aux adresses électroniques du groupe d'adresses électroniques $G_2$ n'est conférée aucune accessibilité à l'adresse électronique locale AL précitée.

Il en est de même en ce qui concerne les fonctions d'accessibilité TOUS, SEULEMENT EUX, SE, et PERSONNE, NOB, pour lesquelles des opérations sur les listes précitées peuvent être réalisées de manière classique.

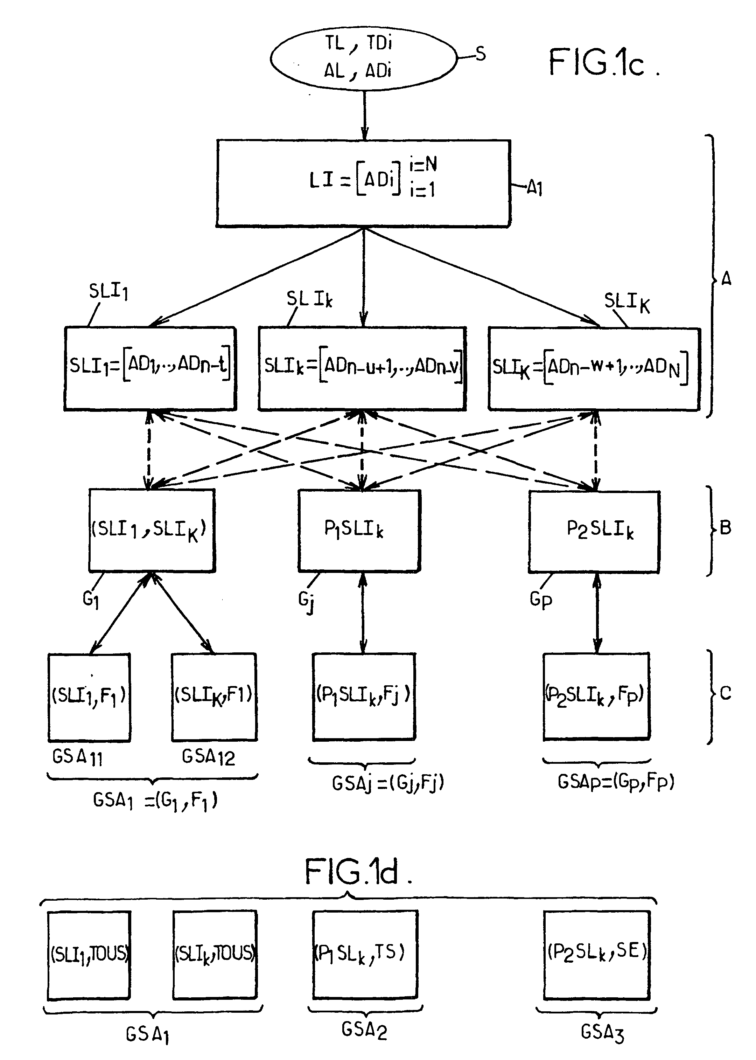

Un mode de mise en oeuvre préférentiel du procédé objet de la présente invention tel que représenté en figures 1a et 1b, sera maintenant décrit en liaison avec les figures 1c et 1d, mode de mise en oeuvre permettant d'obtenir une plus grande flexibilité d'utilisation pour l'utilisateur du terminal local TL.

Conformément au mode de mise en oeuvre de la figure 1c, on indique que le procédé objet de l'invention consiste en outre à constituer l'ensemble des adresses électroniques de chaque terminal distant en sous-ensembles d'intérêt distinct pour l'utilisateur.

De préférence, ainsi que représenté en figure 1c, cette opération est réalisée par l'utilisateur du terminal local TL à l'issue de la constitution de la liste LI des interlocuteurs de ce dernier.

Pour cette raison, ainsi que représenté en figure 1c, l'étape A de la figure 1a peut être avantageusement subdivisée en deux sous-étapes, une sous-étape $A_1$ correspondant à la constitution de la liste d'interlocuteurs LI conformément à l'étape A de la figure 1a, et une sous-étape $A_2$ dans laquelle la liste LI est à son tour subdivisée par l'utilisateur du terminal local TL en sous-listes constitutives de chaque sous-ensemble d'intérêt distinct pour ce dernier.

Sur la figure 1c, les sous-listes sont notées :

$$SLI_l, ..., SLI_k, ..., SLI_K \text{ avec :}$$

$$SLI_l = [AD_1,..., AD_{n-t}]$$
$$SLI_k = [AD_{n-u+1},..., AD_{n-v}]$$
$$SLI_K = [AD_{n-w+1},..., AD_N].$$

Dans la notation précédente, n, t, u, v et w ont des valeurs quelconques, car l'opération de constitution des sous-ensembles d'intérêt distinct, par partition de la liste LI, est laissée à la seule initiative de l'utilisateur du terminal local TL.

On comprend en particulier que chaque sous-ensemble d'intérêt distinct pour l'utilisateur peut correspondre à des sous-ensembles d'intérêt tels que interlocuteurs faisant partie de la famille, des amis, des collègues ou relations de travail de l'utilisateur du terminal local TL par exemple, ainsi qu'il sera décrit de manière plus détaillée ultérieurement dans la description.

L'étape A est alors elle-même suivie de l'étape B de la figure 1a à l'initiative de l'utilisateur du terminal local TL, lequel peut alors procéder au regroupement de certains sous-ensembles d'intérêt distinct en vue de l'attribution à ces derniers d'une fonction d'accessibilité privilégiée spécifique commune.

On comprend bien sûr que la sous-étape $A_2$ et l'étape B peuvent, le cas échéant, être interverties sans sortir du cadre de l'objet de la présente invention.

On comprend également que l'utilisateur du terminal local TL dispose de toute latitude afin d'effectuer toute combinaison entre la partition en sous-ensembles d'intérêt distinct et la constitution des groupes d'adresses électroniques $G_j$. Pour cette raison, la liaison entre les différents blocs de la sous-étape $A_2$ et de l'étape B est représentée par des doubles flèches multiples de bloc à bloc représentées en pointillés.

En particulier et pour cette raison, sur la figure 1c, on a représenté l'association des sous-ensembles $SLI_1$ et $SLI_K$ obtenue à la sous-étape $A_2$, pour constituer le groupe d'adresses électroniques $G_l$, la partition du sous-ensemble d'intérêt distinct $SLI_k$ en sous-ensembles élémentaires $P_{1SLIk}$ et $P_{2SLIk}$ respectivement, le premier sous-ensemble élémentaire $P_{1SLIk}$ étant destiné à former le groupe d'adresses électroniques Gj, et le deuxième sous-ensemble élémentaire $P_{2SLIk}$ étant destiné à former le groupe d'adresses électroniques Gp tel que représenté en figure 1c.

L'opération d'attribution à chaque groupe distinct d'adresses électroniques ainsi constitué d'une fonction d'accessibilité privilégiée à l'étape C est alors réalisée et correspond, à titre d'exemple non limitatif sur la figure 1c, à l'attribution d'une même fonction d'accessibilité $F_1$ aux sous-ensembles $SLI_1$ et $SLI_K$ du groupe d'adresses électroni-

ques $G_I$ pour constituer un groupe d'adresses électroniques d'accessibilité privilégiée distincte $GSA_1$ formé de deux sous-groupes $GSA_{11}$ et $GSA_{12}$.

Il en est de même pour le groupe d'adresses électroniques $G_j$ formé par le sous-ensemble élémentaire $P_{1SLlk}$ auquel est attribuée la fonction d'accessibilité privilégiée $F_j$, et, pour le sous-ensemble élémentaire $P_{2SLlk}$ auquel est attribuée la fonction d'accessibilité privilégiée $F_P$.

A titre d'exemple non limitatif, ainsi que représenté en figure 1d, la fonction $F_1$ mise en oeuvre à l'étape C de la figure 1c peut correspondre à la fonction TOUS, la fonction d'accessibilité privilégiée $F_j$ peut correspondre à la fonction TOUS SAUF, TS, et la fonction d'accessibilité privilégiée $F_P$ à la fonction SEULEMENT EUX, SE, par exemple.

On comprend ainsi que l'utilisateur du terminal local TL dispose de toute latitude afin d'organiser l'accessibilité au terminal local TL dont il dispose en fonction, d'une part, de sa disponibilité effective et, d'autre part, de critères relationnels vis-à-vis de ses interlocuteurs compte tenu des qualités personnelles et/ou professionnelles de ces derniers.

D'une manière générale, on indique que, dans un mode de réalisation préférentiel, les fonctions d'accessibilité privilégiée spécifiques et, bien entendu, les groupes d'adresses électroniques d'accessibilité privilégiée distincts, sont complémentés deux à deux, ceci en vue de faciliter la gestion du niveau d'accessibilité conféré à l'ensemble des interlocuteurs de l'utilisateur du terminal local TL.

Ainsi, en référence à la figure 1b, on indique que la fonction $F_1$, TOUS, et le groupe d'accessibilité privilégiée $GA_1$, correspondent au complément de la fonction d'accessibilité $F_4$, PERSONNE, NOB, et au complément du groupe $GA_4$, alors que la fonction d'accessibilité privilégiée TOUS SAUF, TS, et le groupe d'adresses électroniques d'accessibilité privilégiée distinct $GA_2$ correspondent au complément de la fonction d'accessibilité privilégiée $F_3$ SEULEMENT EUX, SE, et au complément du groupe d'adresses électroniques d'accessibilité privilégiée distinct $GA_3$. La notion de complément s'entend de celle de complément logique.

Bien entendu, le procédé objet de la présente invention est mis en oeuvre, de manière préférentielle, de manière logicielle, afin de faciliter l'utilisation de tout utilisateur non averti d'un terminal local TL.

Dans ce but, à chaque liste ou sous-liste d'adresses électroniques, telles que les listes et sous-listes issues des opérations de définition des groupes à l'étape B, respectivement des sous-ensembles à la sous-étape $A_2$, à l'exception bien entendu de la constitution de la liste d'interlocuteurs LI à la sous-étape $A_1$ ou A de la figure 1a, est associé avantageusement un répertoire, où le cas échéant un sous-répertoire. Ainsi, de préférence, à chaque sous-ensemble d'intérêt distinct, constitué par exemple par une sous-liste $SLI_k$, peut être associé un répertoire et, à chaque groupe distinct d'adresses électroniques, peut être associé un sous-répertoire, ainsi que décrit à l'étape B en liaison avec la figure 1c.

Bien entendu, à chaque sous-répertoire est associée une fonction d'accessibilité privilégiée spécifique.

De cette manière, à chaque adresse électronique de terminal distant inscrit dans le répertoire, respectivement le sous-répertoire considéré, est attribuée l'accessibilité privilégiée spécifique associée à ce sous-répertoire du seul fait de l'appartenance de cette adresse électronique de terminal distant au répertoire et au sous-répertoire précités.

On comprend en particulier que la notion de répertoire et de sous-répertoire est usuelle pour tout utilisateur normalement compétent, la notion de répertoire et de sous-répertoire précités correspondant également à la notion de dossier, respectivement de sous-dossier, de toutes les interfaces graphiques associées aux systèmes d'exploitation actuellement disponibles dans le commerce, et en particulier des plus usuels.

On comprend ainsi que, grâce à l'utilisation des interfaces graphiques précitées, l'utilisateur du terminal local TL est en mesure, par une simple opération de glissement/dépôt au moyen d'un dispositif de pointage, tel qu'une souris ou autre, cette opération étant connue en langage anglo-saxon sous la dénomination de *drag and drop*, d'attribuer à tout groupe d'adresses électroniques de terminaux distants une fonction d'accessibilité privilégiée correspondant à celle d'un sous-répertoire, le cas échéant d'un répertoire, choisi par ce dernier.

Bien entendu, et grâce à la configuration retenue des groupes et sous-ensembles d'adresses électroniques sous forme de sous-répertoires, respectivement de répertoires, il est commode d'attribuer à ces derniers des noms évocateurs de la fonction d'accessibilité privilégiée qui leur est conférée. Dans ces conditions, l'accessibilité au terminal local TL par les terminaux distants TDi peut alors être gérée de la manière la plus simple par l'utilisateur du terminal local considéré.

On indique en particulier que la suppression d'un sous-répertoire revient finalement à supprimer la fonction d'accessibilité privilégiée associée à ce dernier, ce qui permet à l'utilisateur du terminal local TL d'assurer une exécution particulièrement simple de la mise en oeuvre du procédé objet de la présente invention.

Ce dernier peut alors être exécuté à partir d'un programme informatique installé sur le terminal local TL lorsque ce dernier est constitué par exemple par un micro-ordinateur de bureau ou par un micro-ordinateur portable, c'est-à-dire doté de capacités de traitement et de mémorisation suffisantes, ou, au contraire, installé sur un serveur lorsque le terminal est un terminal de radiotéléphonie mobile par exemple, ainsi qu'il sera décrit ultérieurement dans la description. Le programme informatique précité permet de réaliser l'ajout de répertoires spécifiques et bien entendu de modes d'accessibilité privilégiée liés à ces derniers. Il doit bien entendu permettre de réaliser toute notification du niveau d'accessibilité au terminal local TL conféré par l'utilisateur de ce dernier aux terminaux distants TDi dont les utilisateurs sont les interlocuteurs.

Une description plus spécifique d'organisation de répertoires dans le cadre de la mise-en oeuvre du procédé objet de l'invention, sera maintenant donnée en liaison avec les figures 2a à 2c.

Sur la figure 2a, on a représenté les répertoires créés par un utilisateur A d'un terminal local vis-à-vis d'utilisateurs B, C, D, E, F, G de terminaux distants, l'utilisateur A ayant créé des sous-ensembles à la sous-étape $A_2$, ces sous-ensembles étant constitués en répertoires, tels que Travail, Famille, l'utilisateur A ayant défini deux modes de disponibilité :

- disponible, représenté par une icône ou logo face souriante ;
- indisponible, représenté par une croix X.

La configuration représentée en figure 2a peut par exemple être obtenue par constitution d'un groupe d'adresses électroniques d'accessibilité privilégiée, tel que le groupe $GA_3$ de la figure 1b correspondant à la fonction SEULEMENT EUX, SE, pour les utilisateurs B, D et E des sous-ensembles d'intérêt distinct constitués par les répertoires Travail et Famille.

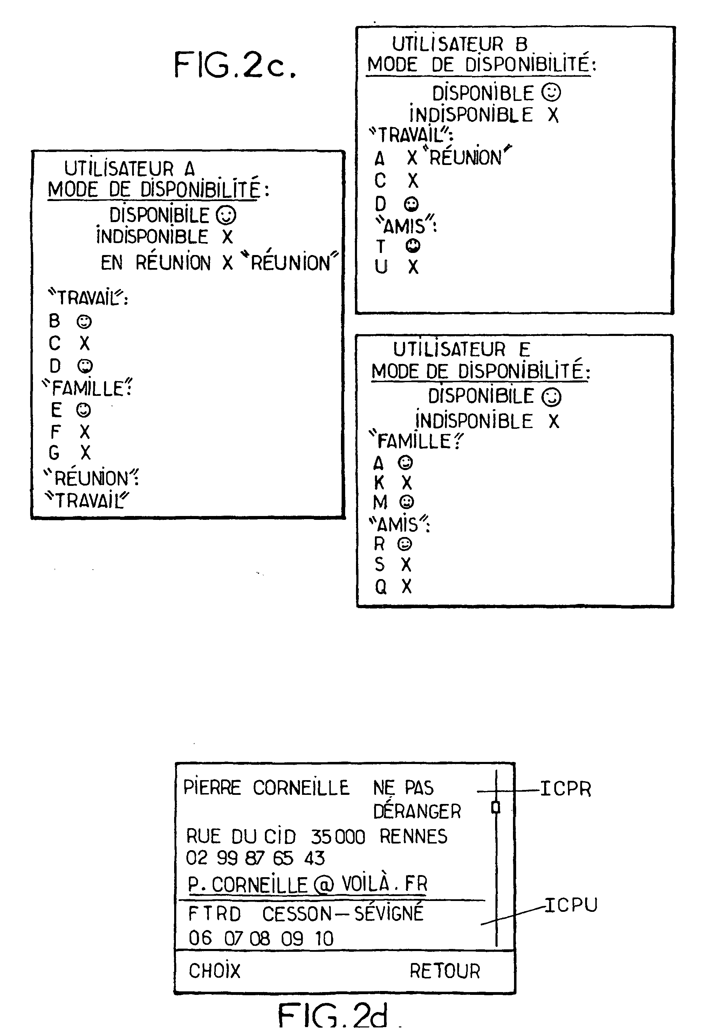

Dans le cas des figures 2b et 2c, sur la figure 2b, on a représenté l'utilisateur A, lequel a fait en outre appel à un mode de disponibilité dite qualifiée, dans lequel une information supplémentaire, relative soit à la raison de son indisponibilité, soit à la durée relative de cette indisponibilité, peut être introduite.

Dans ce but, l'utilisateur A a créé un répertoire spécifique, noté Réunion, correspondant par exemple à l'un des sous-ensembles créés à la sous-étape $A_2$ de la figure 1c. Le mode de disponibilité lié à ce répertoire spécifique est désigné par "Je suis en réunion", ce mode de disponibilité correspondant ainsi à un mode de disponibilité qualifiée.

La copie du répertoire Travail dans le répertoire Réunion, ainsi que représenté en figure 2c, a pour conséquence que tous les utilisateurs de terminaux distants contenus dans le répertoire Réunion, c'est-à-dire dans l'exemple donné en figures 2b et 2c, les utilisateurs B, C et D, voient ainsi l'utilisateur A comme indisponible. L'indisponibilité qualifiée ainsi obtenue résulte de l'association du mode de disponibilité Indisponible au répertoire Réunion et de l'adjonction de l'information réunion au répertoire, et donc au groupe d'adresses électroniques d'accessibilité privilégiée correspondante ainsi constituée.

Les utilisateurs n'appartenant pas au répertoire Réunion, tel que l'utilisateur E appartenant au répertoire Famille, voient au contraire l'utilisateur A comme disponible. Les caractères de disponibilité et d'indisponibilité sont bien entendu représentés par l'icône visage souriant, respectivement la croix X précédemment mentionnés pour les utilisateurs B, respectivement E à la figure 2c.

Bien entendu, toute modification du niveau d'accessibilité de l'utilisateur A, utilisateur du terminal local TL, vis-à-vis d'un ou plusieurs des terminaux distants, est notifiée à ces derniers par l'intermédiaire d'une connexion en réseau et d'un serveur, ainsi qu'il sera décrit ultérieurement dans la description.

Afin d'assurer une accessibilité optimale entre terminal distant et terminal local, ou réciproquement, conformément au procédé objet de l'invention, à chaque adresse électronique de terminal distant ou local est alors associé un ensemble d'attributs spécifiques représentatif de ce terminal distant ou local et de son utilisateur.

En effet, afin d'assurer la mise en oeuvre optimale précitée, il est opportun de permettre la restitution au niveau de chaque terminal, local ou distant, des informations essentielles relatives à l'accessibilité et bien entendu à la disponibilité du terminal distant, respectivement local. On rappelle en effet que chaque terminal local peut constituer un terminal distant vis-à-vis d'un terminal distant jouant le rôle d'un terminal local, dont l'utilisateur met en oeuvre le procédé objet de la présente invention.

D'une manière générale, on indique que les attributs spécifiques représentatifs du terminal distant ou local et de l'utilisateur de ce dernier sont constitués par un fichier lié à l'adresse électronique du terminal local ou distant. Ce fichier peut être mémorisé au niveau d'une mémoire spécifique du terminal considéré, ou le cas échéant du terminal et du serveur permettant la mise en oeuvre du procédé objet de l'invention.

Ainsi que représenté en figure 2d, les attributs spécifiques représentatifs de l'utilisateur d'un terminal comprennent au moins une carte d'identité électronique publique, notée ICPU, accessible à partir de toutes les adresses électroniques d'un terminal distant. Cette carte d'identité électronique publique peut comporter l'adresse professionnelle de l'utilisateur du terminal considéré, le numéro d'appel téléphonique de ce dernier et toutes informations relatives à la vie professionnelle de ce dernier.

En outre, les attributs spécifiques précités peuvent comprendre une carte d'identité électronique privée, notée ICPR, accessible à partir des seules adresses électroniques d'un terminal distant appartenant à au moins un sous-ensemble d'intérêt distinct pour l'utilisateur. La carte d'identité électronique privée peut comprendre l'adresse personnelle de l'utilisateur, son numéro de téléphone personnel, l'adresse électronique d'un terminal disponible au domicile de ce dernier. Bien entendu, d'autres informations peuvent être mentionnées, soit dans la carte d'identité électronique publique, soit dans la carte d'identité électronique privée.

En ce qui concerne les attributs spécifiques représentatifs d'un terminal, ceux-ci peuvent comprendre, au moins, un attribut de classe de terminal, choisi parmi un groupe de classes de terminal et de leur système d'exploitation, classes de terminal tel que micro-ordinateur, assistant numérique, terminal de téléphonie mobile équipé d'un écran d'affichage. Les attributs spécifiques précités peuvent également comprendre un attribut de niveau de service de communication comportant pour chaque classe de terminal des paramètres d'affichage et/ou d'interfaçage de navigation par exemple.

En effet, l'accès aux services de mise en oeuvre du procédé objet de l'invention peut dépendre du type de terminal dont dispose l'utilisateur.

A titre d'exemple non limitatif, on indique que les applications téléchargées sont généralement de nature différente, version allégée, selon la nature du terminal utilisé. Ceci implique une reconnaissance du terminal lors de la mise en oeuvre du procédé objet de la présente invention. Bien entendu, cette reconnaissance est réalisée en fonction des attributs correspondant associés à l'adresse électronique du terminal précité.

D'une manière générale, on peut distinguer trois classes de terminaux :

- terminal micro-ordinateur, avec écran, clavier et système d'exploitation de type Windows, Linux ou autre, que le micro-ordinateur soit de type ordinateur de bureau ou ordinateur portable ;
- terminal mobile avec écran, tel que assistant numérique, avec ou sans clavier et écran tactile et muni d'un système d'exploitation allégé tel que Windows CE, Palm OS, ces terminaux mobiles étant du type PDA ou Handheld PC ;
- terminal de radiotéléphonie mobile avec petit écran d'affichage dont les dimensions sont de l'ordre de 40x30 mm, clavier numérique et compatible avec un logiciel d'interfaçage graphique de type WAP, pour *Wireless Application Protocole* et/ou SAT, pour *SIM Application Toolkit*. Ce type de terminal correspond à un terminal de type *SMARTPHONE.*

En ce qui concerne les niveaux de services alloués à chacun de ces types de terminal, les niveaux de services doivent être envisagés en fonction du terminal utilisé.

Ainsi, les trois classes de terminaux précités définissent trois niveaux de services pour lesquels il est opportun d'adapter des fonctionnalités en termes de possibilités et de contenus, selon le tableau T introduit ci-après :

| Caractéristiques | Smartphone | Palm PC | PC |
|---|---|---|---|
| **Ecran** | | | |
| Taille en cm de l'affichage | 4x4 | 8x6 | 21x11 |
| Résolution | 180x180 | 260x195 | 21x11 |
| Tactile | N | O | N |
| Couleurs | 256 | 65K couleurs | 16 millions |
| **Navigation** | | | |
| Boutons | O | N | O(TAB,flèches,...) |
| Stylet | N | O | N |
| Souris | N | N | O |
| Multi fenêtres | N | Superposés | O |

On comprend ainsi qu'en fonction des attributs spécifiques représentatifs d'un terminal, tel qu'un terminal distant, il est ainsi possible de personnaliser et donc d'optimiser les informations communiquées à ce terminal en fonction du type de terminal dont dispose l'interlocuteur.

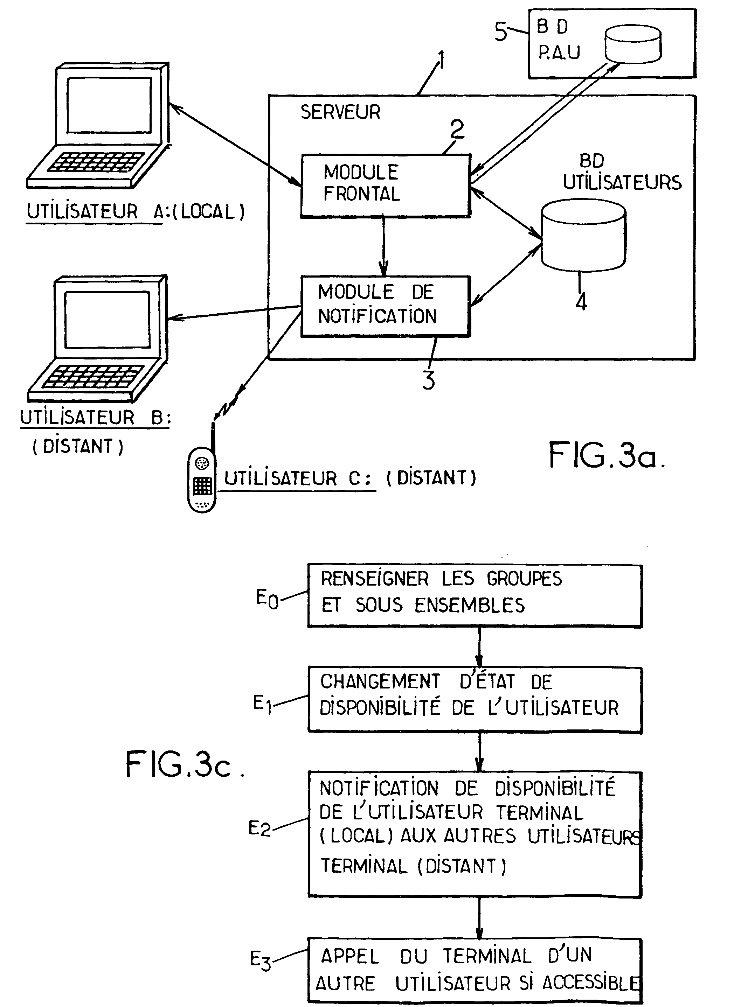

Un système de gestion de l'accessibilité de l'adresse électronique du terminal local d'un utilisateur par un ou plusieurs terminaux distants, conformément au procédé objet de la présente invention, sera maintenant décrit en liaison avec les figures 3a à 3c puis 4a à 4d.

De manière plus spécifique, en référence à la figure 3a, on indique que le système objet de la présente invention comporte un serveur interactif, noté 1, serveur spécifique connecté en réseau avec les terminaux susceptibles d'assurer la mise en oeuvre du procédé objet de l'invention. A titre d'exemple non limitatif, on a représenté un terminal local, constitué par un micro-ordinateur de bureau, affecté à un utilisateur A, un premier terminal distant, constitué par un ordinateur portable affecté à un utilisateur B, et un deuxième terminal distant, constitué par un terminal de radiotéléphonie mobile, affecté à un utilisateur C.

Bien entendu, le procédé et le système objets de la présente invention sont indépendants du mode de liaison de chaque terminal, local respectivement distant, au serveur 1. Ainsi, alors que tout micro-ordinateur de bureau ou portable peut être interconnecté au serveur 1 par l'intermédiaire du réseau IP, la connexion de tout terminal constitué par un terminal de radiotéléphonie mobile est réalisée par l'intermédiaire d'une liaison de radiotéléphonie telle que par exemple une liaison UMTS ou une liaison GPRS par exemple.

Ainsi que représenté sur la figure 3a, le serveur interactif 1 comporte au moins un module 1 d'accès frontal, permettant une connexion interactive de tout terminal local, afin d'assurer, à l'initiative de l'utilisateur de ce terminal local, c'est-à-dire l'utilisateur A sur la figure 3a, une attribution reconfigurable à au moins un groupe d'adresses électroniques de plusieurs terminaux distants, tels que les terminaux des utilisateurs B et C sur la figure 3a, d'une fonction d'accessibilité privilégiée et constituer au moins un groupe d'adresses électroniques d'accessibilité privilégiée à l'adresse électronique du terminal local de l'utilisateur A. On comprend bien sûr que l'attribution dynamique précitée correspond en fait à la mise en oeuvre du procédé objet de la présente invention tel que décrit précédemment en liaison avec les figures 1a à 1d, puis 2a à 2d et au tableau T.

Le serveur interactif 1 spécifique comporte également un module 2 de notification à tout terminal distant, terminal des utilisateurs B et C sur la figure 3a, dont l'adresse électronique appartient à l'ensemble des adresses électroniques constituant une liste d'adresses électroniques d'interlocuteurs de cet utilisateur et du terminal local de ce dernier, liste LI précédemment décrite dans la description, de messages de notification et de mise à jour de l'accessibilité actuelle de l'adresse électronique du terminal local de l'utilisateur A par chaque terminal distant, les terminaux des utilisateurs B et C sur la figure 3a. La notification des messages de notification et de mise à jour de l'accessibilité actuelle de l'adresse électronique de ce terminal local est également effectuée à tout terminal distant d'un interlocuteur potentiel défini par cet utilisateur sur son terminal local.

A titre d'exemple non limitatif, on indique que le serveur interactif 1 spécifique est bien entendu muni d'une base de données utilisateur, portant la référence 3, pour laquelle la mémorisation des informations relatives à l'allocation de fonctions d'accessibilité privilégiée est réalisée par l'intermédiaire du module frontal 2, et pour assurer la notification des messages de mise à jour aux terminaux distant par l'intermédiaire du module de notification 3, à partir de la lecture des mises à jour précitées sur la base de données utilisateur.

Enfin, et de manière non limitative, au serveur 1 peut être associée une base de données utilisateur dite PAU, pour Point d'Authentification Unique, cette base de données, portant la référence 5, assurant la gestion des abonnés des utilisateurs habilités à mettre en oeuvre le procédé objet de la présente invention à partir de leur terminal jouant le rôle de terminal local et de tout terminal distant également habilité à mettre en oeuvre le procédé objet de la présente invention.

A titre d'exemple non limitatif, on indique en outre que la base de données à points d'authentification unique, portant la référence 5, peut être directement intégrée au serveur 1 et, par exemple, être constituée en une base de données auxiliaire vis-à-vis de la base de données utilisateur.

Lorsque le terminal considéré, tel qu'un micro-ordinateur de bureau ou un micro-ordinateur portable, présente des capacités suffisantes de traitement et de mémorisation, le procédé objet de la présente invention peut être mis en oeuvre à partir de modules logiciels chargés pour partie sur le disque dur de ces terminaux, ces modules logiciels correspondant par exemple à des modules de création de répertoires, de modification de répertoires et bien entendu d'association de fonctions d'accessibilité privilégiée à ces derniers, ainsi que décrit précédemment dans la description. Dans ces conditions, les modules logiciels précités peuvent en outre comporter tout module logiciel de synchronisation de fichiers permettant notamment, lors d'une modification de répertoire et ou de fonction d'accessibilité associée, par comparaison à la configuration antérieure correspondante, de ne transmettre au module frontal et finalement à la base de données utilisateur, que les modifications effectivement introduites par l'utilisateur du terminal local, c'est-à-dire l'utilisateur A.

Au contraire, lorsque le terminal local est constitué par un terminal de radiotéléphonie mobile, et donc à capacités de traitement beaucoup plus limitées, tel que le terminal de l'utilisateur C sur la figure 3a, l'essentiel des modules logiciel précités peut être avantageusement localisé au niveau du serveur 1, la création, la modification des répertoires et l'association des fonctions d'accessibilité privilégiée à ces derniers pouvant être réalisée de manière interactive entre le terminal précité, jouant le rôle de terminal local, et le serveur 1.

Dans tous les cas, suite à la réception par le module frontal 2 de toutes modifications effectuées à partir d'un terminal local de type quelconque, le serveur 1 précité procède à la mémorisation de ces modifications pour le compte de l'utilisateur du terminal local considéré sur la base de données utilisateur 4.

Suite à l'opération de mémorisation précitée, le module de notification 3 permet alors, par lecture des modifications apportées, de procéder à la notification de ces modifications à chaque terminal concerné, à partir bien entendu de l'adresse électronique de chacun de ces derniers.

Les opérations réalisées par le système objet de la présente invention, et en particulier dans le serveur 1, sont représentées en figure 3c de la manière ci-après.

Lors de la création ou de la modification de répertoires et de l'association à ces derniers de fonctions d'accessibilité privilégiée au niveau d'un terminal local, une première opération consiste en une opération notée $E_0$, con-

sistant à renseigner les groupes et sous-ensembles par l'envoi d'un message au module frontal 2 du serveur interactif spécifique 1.

L'opération $E_0$ précitée est suivie d'une opération $E_1$ consistant, au niveau du module frontal, à répertorier l'ensemble des changements d'état de disponibilité de l'utilisateur du terminal local, l'utilisateur A sur la figure 3a. Cette opération permet en outre de répertorier l'ensemble des terminaux distants pour lesquels une modification est intervenue. L'ensemble est alors mémorisé au niveau de la base de données utilisateur 4.

L'étape $E_1$ est suivie d'une étape $E_2$ de notification de disponibilité de l'utilisateur du terminal local aux autres utilisateurs de terminal distant, par une commande du module de notification 3, cette commande réalisant successivement la lecture des modifications introduites sur la base de données utilisateur et, bien entendu, la référence et les adresses électroniques des terminaux distants pour lesquels une modification est intervenue. Le module de notification 3 procède alors à la notification proprement dite des modifications pertinentes à chaque terminal distant, les terminaux des utilisateurs B et C sur la figure 3a.

L'étape $E_2$ peut être alors suivie d'une étape $E_3$ d'appel du terminal d'un autre utilisateur distant concerné par la modification si ce nouvel utilisateur est accessible, et dans le cas où tout utilisateur soumis à notification n'est lui-même pas accessible.

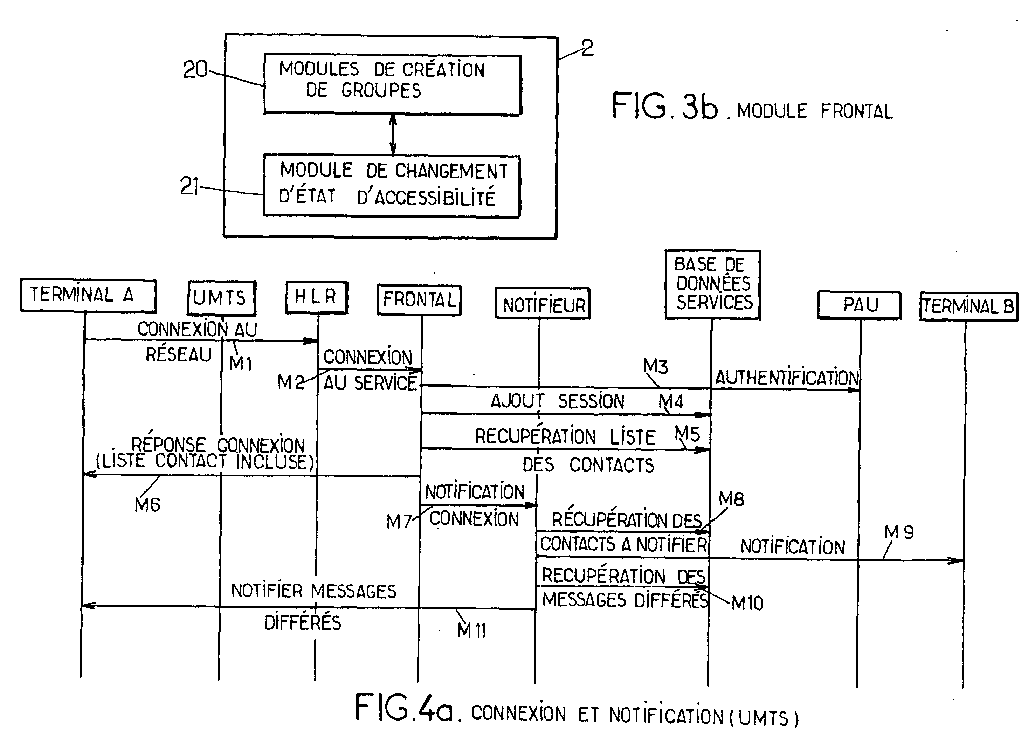

En ce qui concerne le module frontal 2, ou de manière plus spécifique le serveur 1, celui-ci, afin d'assurer la mise en oeuvre du procédé, objet de la présente invention, au niveau de terminaux constitués par des terminaux de radiotéléphonie mobile à faibles capacités, peut comporter en outre, ainsi que représenté en figure 3b, un module de création de groupes, portant la référence 20, ces groupes correspondant par exemple à des répertoires ou sous-répertoires auxquels est associé un module de changement d'état d'accessibilité 21. Le module de création de groupes consiste en fait à attribuer un répertoire ou un sous-répertoire à toute liste ou sous-liste d'adresses de terminaux électroniques distants ADi obtenue par subdivision et/ou partition, afin de constituer des listes et sous-listes, ainsi que mentionné précédemment dans la description. Le module de changement d'état d'accessibilité 21 peut consister à calculer les intersections de listes précédemment décrites pour réaliser les fonctions d'accessibilité décrites précédemment dans la description en liaison avec le procédé objet de la présente invention.

Bien entendu, lorsque le terminal jouant le rôle de terminal local est un terminal de type micro-ordinateur, les modules de création de groupes et de changement d'état d'accessibilité 20 et 21 précités peuvent être installés au niveau des terminaux précités.

A titre d'exemple non limitatif, un protocole d'échange de messages entre un terminal local, tel que celui de l'utilisateur A, et un terminal distant, tel que celui de l'utilisateur B, sera maintenant décrit en liaison avec les figures 4a à 4d dans le cas où le terminal local de l'utilisateur A est un terminal de radiotéléphonie mobile connecté au réseau UMTS.

En ce qui concerne la connexion du terminal distant de l'utilisateur B, cette connexion peut être réalisée de façon quelconque, c'est-à-dire soit par l'intermédiaire du réseau UMTS, soit par l'intermédiaire du réseau IP, le réseau INTERNET. Dans l'un ou l'autre cas, le terminal distant de l'utilisateur B est alors constitué par un terminal de téléphonie mobile, respectivement par un micro-ordinateur de bureau ou un micro-ordinateur portable.

La figure 4a représente les différents messages échangés pour les opérations de connexion et de notification.

Les messages échangés sont énumérés ci-après :

$M_1$ : message de connexion du terminal local de l'utilisateur A à l'unité HLR, pour *Home Location Register* en langage anglo-saxon, ce message $M_1$ étant transmis par l'intermédiaire du réseau UMTS ;

$M_2$ : message de connexion de l'unité HLR au module frontal 2 ;

$M_3$ : message d'authentification du module frontal 2 à la base de données PAU, 5 et, sur authentification réussie,

$M_4$ : message d'ajout de session ;

$M_5$ : récupération de la liste des contacts, c'est-à-dire de la liste des adresses des terminaux distants des interlocuteurs du terminal local de l'utilisateur A ;

$M_6$ : message de réponse de connexion incluant la liste des contacts récupérés par le message $M_5$ à partir du module frontal vers le terminal local de l'utilisateur A.

On note en particulier que ce protocole permet de restituer au terminal local la configuration existante, et, bien entendu, lors d'une première mise en service à partir du terminal local de l'utilisateur A, une liste vide pour la liste des contacts incluse.

L'opération de notification, à partir du module frontal 2, comprend les messages ci-après :

$M_7$ : message de notification de connexion du module frontal 2 au module de notification 3 ;

$M_8$ : récupération des contacts à notifier à la base de données utilisateur 4 ;

$M_9$ : message de notification proprement dite du module de notification 3 au terminal distant de l'utilisateur B.

Bien entendu, le protocole précité peut être complété par des messages de récupération des messages différés, $M_{10}$, et des messages de notification différés, $M_{11}$, du module de notification 3 à la base de données et services 4, respectivement au terminal local de l'utilisateur A.

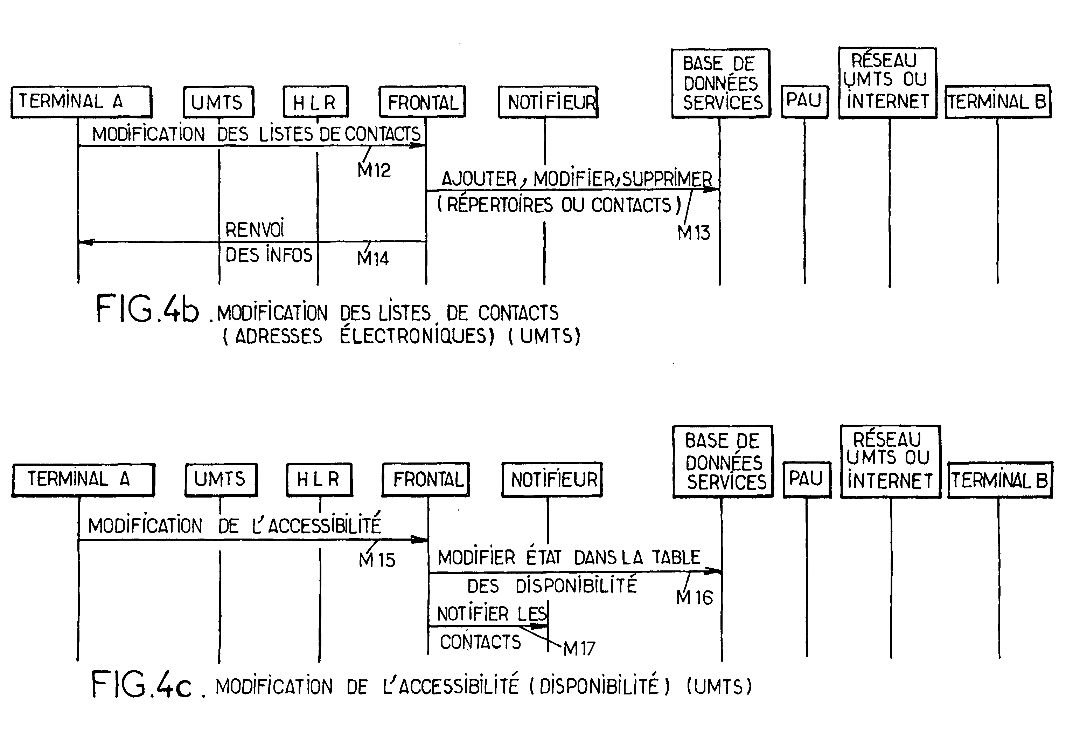

La figure 4b concerne l'échange de messages lors de la modification des listes de contacts, c'est-à-dire des adresses électroniques des interlocuteurs de l'utilisateur du terminal local.

Les messages mis en oeuvre sont les suivants :

$M_{12}$ : message de modification des listes de contacts adressé du terminal local de l'utilisateur A au module frontal 2 par l'intermédiaire du réseau UMTS, c'est-à-dire des listes et sous-listes décrites précédemment dans la description pour la mise en oeuvre du protocole objet de l'invention, ce message étant adressé bien entendu du terminal de l'utilisateur A au module frontal 2 selon la sélection faite par l'utilisateur du terminal local ;

$M_{13}$ : message d'adjonction, de modification ou de suppression de répertoires ou d'adresses électroniques dans ces répertoires, adressé de l'unité frontale 2 vers la base de données utilisateur 4 ;

$M_{14}$ : message de renvoi du module frontal 2 vers le terminal local de l'utilisateur A, ce message constituant en fait un accusé de réception.

La figure 4c représente le protocole d'échange de messages pour la modification de l'accessibilité, c'est-à-dire de la disponibilité déclarée par l'utilisateur A du terminal local vis-à-vis d'un ou plusieurs terminaux distants.

Les messages mis en oeuvre sont les suivants :

$M_{15}$ : message de modification de l'état de disponibilité selon le choix de l'utilisateur ;

$M_{16}$ : message de modification de l'état de disponibilité dans la table des disponibilités, ce message $M_{16}$ ayant pour objet, dans la base de données utilisateur 4, à associer à toute liste ou sous-liste telle que décrite précédemment dans la description, une fonction d'accessibilité privilégiée à partir de l'ensemble des fonctions d'accessibilité privilégiée dont on dispose. Le message $M_{16}$ permet ainsi de mémoriser, au niveau de la base de données utilisateur 4, l'ensemble des modifications introduites ;

$M_{17}$ : message de commande de notification des contacts après modification, adressé par le module frontal 2 au module de notification 3.

Le protocole de notification peut alors être mis en oeuvre suite à la réception par le module de notification 3, selon le protocole de notification décrit en liaison avec la figure 4a.

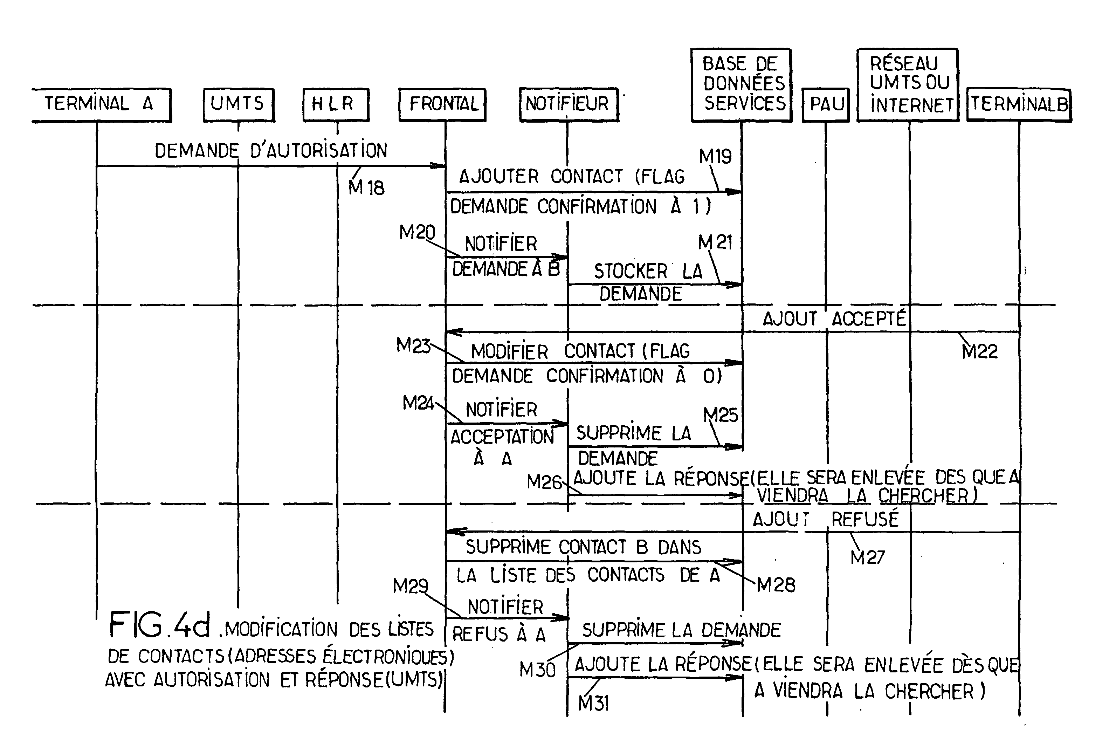

La figure 4d est relative au protocole de modification des listes de contacts, c'est-à-dire des listes d'adresses électroniques avec une procédure d'autorisation et de réponse données par le terminal distant de l'utilisateur B.

Dans cette hypothèse, les messages mis en oeuvre sont les suivants :

$M_{18}$ : message de demande d'autorisation transmis par le terminal local de l'utilisateur A au module frontal 2 par l'intermédiaire du réseau UMTS ;

$M_{19}$ : message d'adjonction de contact comportant une demande de confirmation par l'intermédiaire d'un drapeau ou *flag* à une valeur déterminée, telle que la valeur 1 par exemple. Le message $M_{19}$ est transmis du module frontal 2 à la base de données utilisateur 4 ;

$M_{20}$ : message de notification de demande à l'attention du terminal distant de l'utilisateur B. Ce message est adressé du module frontal 2 au module de notification 3, la procédure de notification au terminal distant de l'utilisateur B pouvant ensuite être mise en oeuvre conformément au protocole de notification tel que décrit en liaison avec la figure 4a ;

$M_{21}$ : message de mémorisation ou de stockage de la demande adressé du module de notification 3 à la base de données utilisateur 4.

La procédure de demande d'autorisation est terminée et est alors subordonnée à la réponse d'acceptation ou de refus de la part du terminal B selon les protocoles ci-après représentés également en figure 4d.

Sur acceptation de l'utilisateur B du terminal distant, l'adjonction demandée par le terminal local étant acceptée, les messages échangés sont les suivants :

$M_{22}$ message d'acceptation d'ajout, adressé du terminal distant de l'utilisateur B au module frontal 2 ;

$M_{23}$ message de modification de contact, adressé du module frontal 2 à la base de données utilisateur 4, ce message de modification pouvant comporter un drapeau de demande de confirmation, à la valeur 0 par exemple ;

$M_{24}$ message de notification d'acceptation par le terminal distant de l'utilisateur B à l'utilisateur A du terminal local, ce message étant adressé du module frontal 2 au module de notification 3.

La procédure de notification peut être mise en oeuvre conformément au protocole représenté et décrit en liaison avec la figure 4a.

D'autres messages peuvent être prévus, tels que :

$M_{25}$ message de suppression de la demande d'autorisation, transmis du module de notification 3 à la base de données utilisateur 4 ;

$M_{26}$ message d'adjonction de la réponse, transmis également du module de notification 3 à la base de données utilisateur 4.

Sur refus de l'utilisateur B du terminal distant, l'adjonction de l'adresse électronique du terminal distant précité étant refusée par ce dernier, les messages ci-après mis en oeuvre sont les suivants :

$M_{27}$ message de refus, transmis du terminal distant de l'utilisateur B au module frontal 2 ;

$M_{28}$ message de suppression de l'adresse électronique ou contact de l'utilisateur B dans la liste des interlocuteurs ou contacts de l'utilisateur A, transmis du module frontal 2 à la base de données utilisateur 4 ;

$M_{29}$ message de notification de refus par l'utilisateur B à l'utilisateur A, ce message étant transmis du module frontal 2 au module de notification 3.

La procédure de notification peut alors être conduite conformément au protocole représenté en figure 4a.

Les messages de suppression de la demande, $M_{30}$, et d'ajout de la réponse, $M_{31}$, peuvent correspondre aux messages $M_{25}$ et $M_{26}$ précédemment décrits en relation avec la même figure 4d.

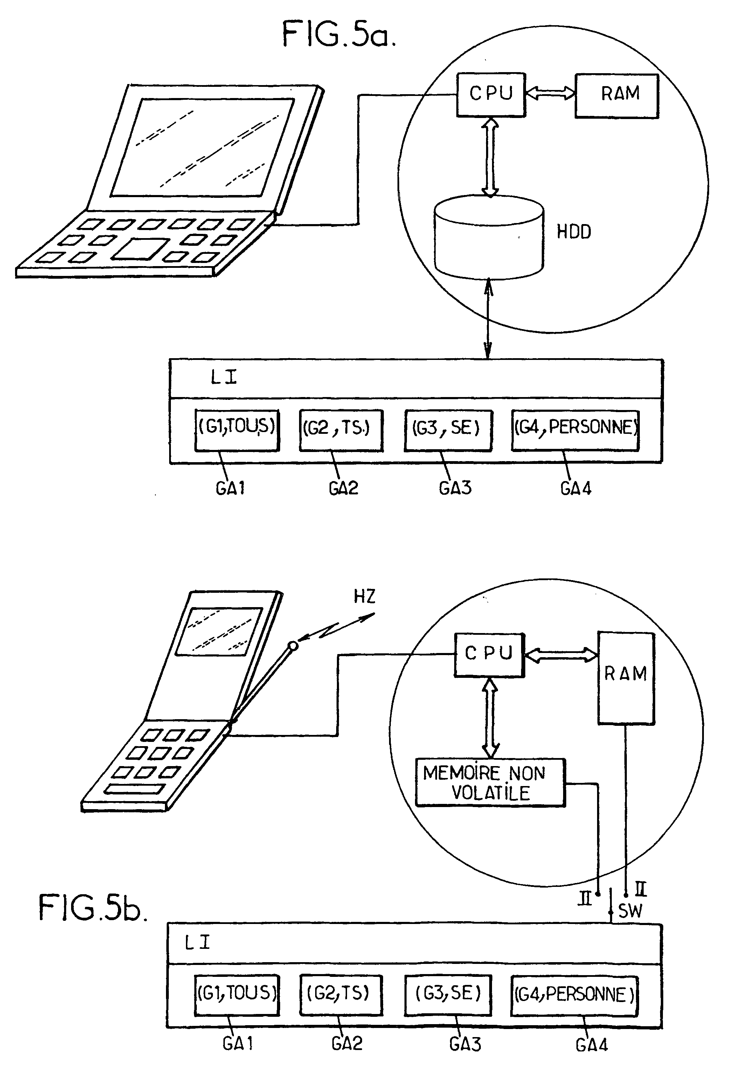

Un terminal muni d'une adresse électronique d'accès spécialement adapté à la mise en oeuvre du procédé et du système objets de la présente invention, sera maintenant décrit en liaison avec les figures 5a à 5d, puis 5e à 5i.

Le terminal précité peut bien entendu jouer le rôle de terminal local, respectivement de terminal distant pour la mise en oeuvre du procédé et du système objets de la présente invention tels que décrits précédemment dans la description.

Selon un aspect remarquable de mise en oeuvre, chaque terminal comporte au moins, mémorisé en mémoire spécifique, un ensemble d'adresses électroniques de chaque terminal distant, le terminal considéré jouant le rôle d'un terminal local, cet ensemble étant constitué en au moins une liste d'adresses électroniques d'interlocuteurs de l'utilisateur de ce terminal.

Sur la figure 5a et la figure 5b, on a représenté l'ensemble des adresses électroniques précité par la liste LI précédemment décrite dans la description en liaison avec les figures 1a, 1b, 1c et 1d.

En outre, la mémoire spécifique précitée comporte une pluralité de groupes distincts d'adresses électroniques, ces groupes distincts étant constitués à partir de la liste d'adresses électroniques d'interlocuteurs de l'utilisateur de ce terminal. Sur les figures 5a et 5b, les groupes précités sont représentés par les groupes $G_1$, $G_2$, $G_3$ et $G_4$, lesquels correspondent au groupe $G_l$, .-, $G_j$,.., $G_P$ représentés en figures 1a et 1c.

En outre, la mémoire spécifique comporte au moins une fonction d'accessibilité privilégiée spécifique, choisie parmi une pluralité de fonctions d'accessibilité privilégiée, chaque fonction d'accessibilité privilégiée présentant un degré d'accessibilité différent du degré d'accessibilité des autres fonctions d'accessibilité de cette pluralité, pour constituer des groupes d'adresses électroniques d'accessibilité privilégiée distincte à l'adresse électronique d'accès à ce terminal. Sur les figures 5a et 5b, les groupes d'adresses électroniques d'accessibilité privilégiée distincte à l'adresse électronique d'accès au terminal, terminal local, portent les références $GA_1$, $GA_2$, $GA_3$, $GA_4$, de même que dans les figures 1a, 1b, par exemple.

Bien entendu, et de manière préférentielle, peuvent être mémorisés des groupes dont les fonctions d'accessibilité privilégiée correspondent à la fonction TOUS, TOUS SAUF, TS, SEULEMENT EUX, SE, et PERSONNE, NOB, telle que représentée notamment en figures 1b et 1d décrites précédemment dans la description.

Bien entendu, la mémoire spécifique peut comporter également une pluralité de sous-ensembles d'adresses électroniques de terminaux distants, chacun des sous-ensembles étant constitué en un sous-ensemble d'intérêt distinct, c'est-à-dire selon les sous-ensembles $SLI_1$,..., $SLI_k$, ..., $SLI_K$, tels que représentés par exemple en figure 1c. Les ensembles et sous-ensembles d'adresses électroniques de terminaux distants, mémorisés sur la mémoire spécifique précitée, peuvent être organisés en répertoires et les groupes distincts peuvent être organisés en sous-répertoires auxquels est associée une fonction d'accessibilité spécifique, à chaque adresse électronique de terminal distant étant attribuée l'accessibilité privilégiée spécifique associée aux sous-répertoires correspondants, du seul fait de l'appartenance de cette adresse électronique de terminal distant aux sous-répertoires précités, ainsi que représenté notamment en figures 1c et 1d précédemment décrites dans la description.

La figure 5a représente de manière plus spécifique le cas où le terminal est constitué par un micro-ordinateur, ce micro-ordinateur, bien que représenté par un micro-ordinateur portable, pouvant bien entendu être constitué par un micro-ordinateur de bureau. Dans ces conditions, la mémoire spécifique est la mémoire de masse de ce micro-ordinateur, mémoire de masse notée HDD.

Au contraire, lorsque le terminal est constitué par un terminal de radiotéléphonie mobile, ainsi que représenté en figure 5b, ce terminal comporte, mémorisé par exemple en mémoire non volatile, le cas échéant en mémoire de travail, l'ensemble des structures de données, c'est-à-dire des adresses électroniques de terminaux distants constituées en listes et sous-listes représentant les ensembles et sous-ensembles, respectivement les groupes précités. On comprend en particulier que ces structures de données peuvent être téléchargées sur le terminal distant et mémorisées en mémoire vive de type RAM lorsque celle-ci présente une capacité suffisante pour assurer la mémorisation, ou au contraire, de préférence, dans une mémoire non volatile, telle qu'une mémoire EEPROM, mémoire reprogrammable permettant de manière plus spécifique la mise en oeuvre du procédé, objet de la présente invention, par simple actualisation des modifications d'accessibilité introduites par un terminal local au niveau du terminal distant constitué par le terminal de radiotéléphonie mobile considéré.

Sur la figure 5b, le commutateur SW représente, de manière symbolique, la mémorisation des structures de données précitées, soit dans la mémoire vive RAM, soit dans la mémoire non volatile.

Bien entendu, ainsi que représenté en figure 5b, le terminal de radiotéléphonie mobile précité est muni d'un écran d'affichage, même de dimensions réduites, afin d'assurer l'affichage des groupes répertoires et sous-répertoires précités, conformément aux figures 2a à 2c précédemment décrites dans la description.

Afin d'assurer l'affichage précité, le terminal de téléphonie mobile tel que représenté en figure 5b comprend en outre, mémorisé en mémoire non volatile par exemple, un logiciel spécifique d'interfaçage graphique, tel que le logiciel WAP, permettant l'affichage des répertoires et sous-répertoires contenant les ensembles, respectivement les sous-ensembles ou groupes d'adresses électroniques de terminaux distants.

Le procédé et le système, objets de la présente invention, tels que décrits précédemment, permettent d'assurer une gestion très efficace des adresses électroniques de terminaux locaux ou distants. En outre, ils permettent également d'assurer une gestion simultanée de tout numéro d'appel téléphonique d'un terminal constitué par un terminal de radiotéléphonie mobile doté en outre d'une adresse électronique de communication sur un réseau IP.

Ce type de terminal de radiotéléphonie mobile peut correspondre par exemple à un terminal de radiotéléphonie mobile de type GPRS, ce système de radiotéléphonie représentant une évolution majeure du système GSM avec l'introduction de la transmission de données en mode paquets.

Pour cette raison, le service de radiotéléphonie GPRS définit une architecture de réseau à commutation de paquets avec gestion de la mobilité et avec accès par voie radio, par l'intermédiaire d'un simple numéro d'appel. Dans ces conditions, le réseau et le système GPRS peuvent être vus comme un réseau de données à part entière, lequel dispose en outre d'un réseau de radiotéléphonie existant.

Le système de radiotéléphonie GPRS permet des transmissions de données à des débits allant jusqu'à 20 kb/s, un tel débit permettant avant tout d'assurer des transferts fréquents de petits volumes de données relativement espacés dans le temps.

Dans ces conditions, un terminal de radiotéléphonie mobile interconnecté au système et au réseau GPRS, dispose d'une adresse électronique spécifique permettant d'accéder à ce dernier par l'intermédiaire du réseau IP, ainsi que d'un numéro d'appel téléphonique permettant également d'accéder à ce terminal par simple appel téléphonique.

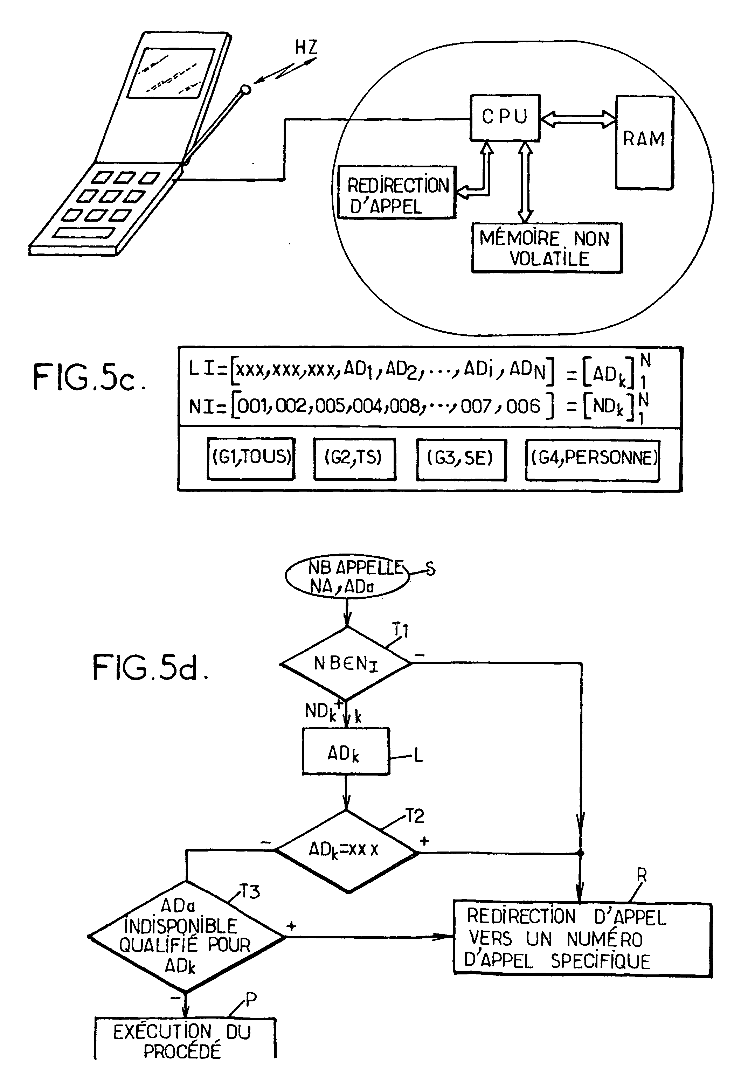

Afin d'assurer la gestion, non seulement de l'adresse électronique de tout terminal de radiotéléphonie mobile de ce type, conformément au procédé objet de la présente invention tel que décrit précédemment dans la description, mais également du numéro d'appel téléphonique associé à ce dernier, et, en définitive, afin d'assurer une mise en oeuvre spécifique du procédé objet de la présente invention pour tout ensemble de terminaux de téléphonie mobile de ce type, chaque terminal, que celui-ci soit constitué par un terminal de téléphonie mobile ou non, peut comporter en outre, une liste des numéros d'appel téléphonique des terminaux distants constitués par un terminal de téléphonie mobile. Sur la figure 5c, cette liste est réputée mémorisée en mémoire non volatile et est désignée par NI.

La liste NI comporte au moins les numéros d'appel téléphonique des terminaux de téléphonie mobile dont l'adresse électronique d'accès au réseau IP appartient à la liste des interlocuteurs de l'utilisateur de ce terminal, lequel joue par exemple le rôle de terminal local.

En outre, le terminal précité comprend un module de redirection de l'appel téléphonique émanant de l'un des numéros d'appel téléphonique appartenant à la liste des numéros d'appel téléphonique, liste NI, soit lorsque le terminal distant ne comporte pas d'adresse électronique d'accès au réseau IP, soit lorsque l'utilisateur de ce terminal distant et ce terminal distant ne sont pas habilités à mettre en oeuvre le procédé objet de l'invention tel que décrit précédemment dans la description, ou encore lorsque l'utilisateur de ce terminal distant et ce terminal distant sont habilités à mettre en oeuvre le procédé de gestion précédemment décrit dans la description, mais que l'utilisateur de ce terminal, jouant le rôle de terminal local, s'est déclaré indisponible selon un mode d'indisponibilité ou d'indisponibilité qualifiée vis-à-vis de l'utilisateur de ce terminal distant.

Un mode de mise en oeuvre spécifique non limitatif de la redirection de l'appel téléphonique à partir d'un terminal constitué par un terminal de radiotéléphonie mobile muni, ou non, d'une adresse électronique, sera maintenant décrit en liaison avec la figure 5d, en référence à la figure 5c précitée.

Pour la mise en oeuvre d'un tel mode opératoire, il peut être commode, ainsi que représenté en figure 5c, d'établir des listes d'adresses électroniques, listes LI, respectivement de numéros d'appel téléphonique, listes NI, comportant un même nombre d'éléments.

Lorsque le numéro d'appel téléphonique du terminal distant ne comporte pas d'adresse électronique permettant l'accès de type réseau IP, à l'emplacement correspondant à l'emplacement du numéro d'appel téléphonique de ce même terminal, est attribué, dans la liste des adresses électroniques, la liste LI, une valeur d'adresse électronique arbitraire, bien entendu distincte d'une adresse électronique véritable. Cette valeur arbitraire est notée XXX sur la figure 5c.

Au contraire, lorsque le terminal distant constitué par un terminal de radiotéléphonie mobile comporte une adresse électronique d'accès de type IP, la valeur de cette adresse électronique est bien entendu introduite dans la liste LI. Le numéro d'appel téléphonique correspondant est également introduit au même emplacement que celui de l'adresse électronique dans la liste LI, de sorte qu'une correspondance bi-univoque est réalisée entre l'adresse électronique d'un terminal de radiotéléphonie mobile et le numéro d'appel téléphonique de ce terminal, respectivement entre la valeur arbitraire XXX et le numéro d'appel téléphonique d'un terminal non muni d'une adresse électronique d'accès de type IP.

La mise en oeuvre du protocole de redirection peut alors être réalisée, de manière non limitative, conformément à la figure 5d, de la manière suivante :

- On suppose une situation de départ dans laquelle un utilisateur B, utilisant par exemple un terminal de radiotéléphonie mobile dont le numéro d'appel téléphonique est NB, appelle un autre terminal d'un utilisateur A dont le numéro d'appel téléphonique est NA, et bien entendu l'adresse électronique ADa. Dans l'hypothèse de départ S, on ne fait pas d'hypothèse sur l'existence ou la non-existence d'une adresse électronique pour le terminal de l'utilisateur appelant B.

- Sur réception de l'appel téléphonique de l'utilisateur B, et bien entendu du numéro de l'utilisateur appelant NB, au niveau du terminal A, un test $T_1$ peut être réalisé, consistant à vérifier l'appartenance du numéro d'appel téléphonique NB à la liste NI.

  Sur réponse négative au test $T_1$, le terminal de l'utilisateur B ne faisant pas partie a priori de la liste des interlocuteurs de l'utilisateur A du terminal considéré, une opération de redirection d'appel vers un numéro d'appel spécifique peut être réalisée, à l'étape R. Dans cette opération de redirection R, l'utilisateur B appelant se voit renvoyé vers le numéro d'appel spécifique, qui peut être par exemple la secrétaire de l'utilisateur A ou tout service approprié. Au contraire, sur réponse positive au test $T_1$, le numéro d'appel téléphonique NB de l'utilisateur B appartenant à la liste NI, et faisant donc partie des interlocuteurs de l'utilisateur A, le test $T_1$ précité permet, de manière classique, de déterminer le rang k du numéro d'appel téléphonique NB de l'utilisateur B appelant.

  La discrimination du rang k de ce dernier dans la liste NI permet bien entendu, en raison de la correspondance bi-univoque entre adresse électronique et numéro d'appel téléphonique des listes NI et LI, d'effectuer une lecture de l'adresse électronique supposée $AD_k$ attribuée au terminal de l'utilisateur appelant. Cette étape de lecture est notée L sur la figure 5d.

- L'étape L est alors suivie d'une étape de test $T_2$, laquelle consiste à comparer, par comparaison d'égalité, l'adresse électronique supposée $AD_k$ à la valeur d'adresse arbitraire XXX assignée lorsque le terminal de l'utilisateur B appelant ne dispose d'aucune adresse électronique.

- Sur réponse positive au test $T_2$, le terminal de l'utilisateur B ne disposant d'aucune adresse électronique, un appel à l'étape de redirection R d'appel vers un numéro d'appel spécifique peut être mis en oeuvre pour assurer une gestion efficace de l'appel téléphonique de l'utilisateur B.

- Sur réponse négative au test $T_2$, le terminal de l'utilisateur B bénéficiant a priori d'une adresse électronique de type IP, un test $T_3$ est réalisé afin de vérifier l'existence d'un mode de disponibilité correspondant, soit à une indisponibilité stricte, soit à une indisponibilité qualifiée, du terminal de l'utilisateur A d'adresse $AD_a$ pour le terminal d'adresse $AD_k$ de l'utilisateur B.

- Sur réponse positive au test $T_3$, le terminal de l'utilisateur A et l'utilisateur A s'étant déclarés indisponibles, soit par indisponibilité stricte, soit par indisponibilité qualifiée vis-à-vis de l'utilisateur B et du terminal de celui-ci d'adresse électronique $AD_k$, un appel à l'étape de redirection d'appel vers un numéro d'appel spécifique peut être exécuté ;

- au contraire, sur réponse négative au test $T_3$, le terminal de l'utilisateur A et ce dernier s'étant déclarés disponibles vis-à-vis du terminal et de l'utilisateur B, le procédé objet de la présente invention peut être poursuivi conformément à la description précédemment donnée.

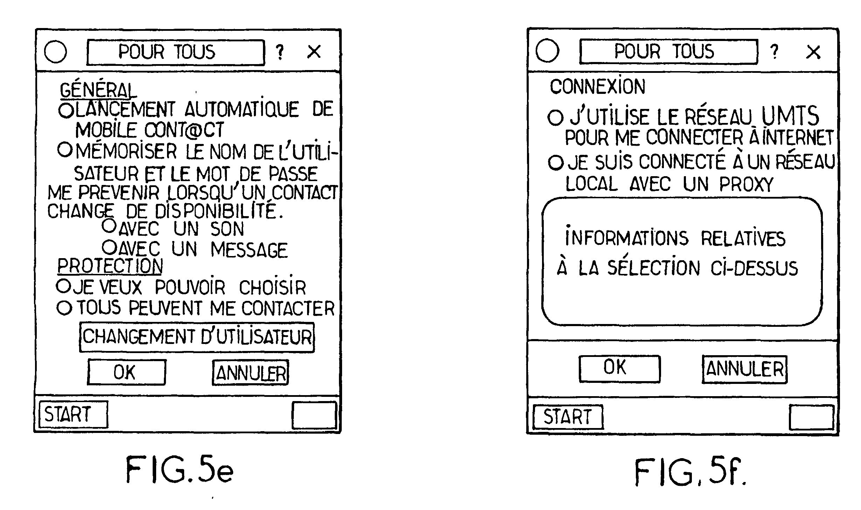

Différentes pages écrans affichables sur un terminal, permettant la mise en oeuvre du procédé et du système objets de la présente invention, seront maintenant décrites en liaison avec les figures 5e à 5i.

La figure 5e représente, à titre illustratif, une page écran générale de personnalisation du logiciel permettant la mise en oeuvre du procédé objet de la présente invention.

La page écran précitée comporte notamment un champ de sélection du mode d'avertissement de l'utilisateur du terminal lorsqu'un ami, défini comme l'utilisateur du terminal dont l'adresse électronique est inscrite dans le répertoire Amis, tel que décrit précédemment dans la description, se connecte ou se déconnecte, l'avertissement pouvant être réalisé avec un son ou avec un message écrit. La page écran précitée comprend également un champ de choix de tous les interlocuteurs ou de certains de ceux-ci. Les choix précités peuvent bien entendu être réalisés, de manière classique, à partir d'un système de pointage, telle qu'une souris ou autre.

La figure 5f présente une page écran permettant d'initialiser le type de connexion au réseau utilisé et, dans le cas de la figure 5f, au réseau INTERNET.

La page écran précitée peut comprendre différents champs précisant la connexion directe UMTS ou, au contraire, par l'intermédiaire d'un "*proxy*", ainsi que la désignation du nom du serveur utilisé et le numéro du port correspondant. D'autres champs peuvent être utilisés.

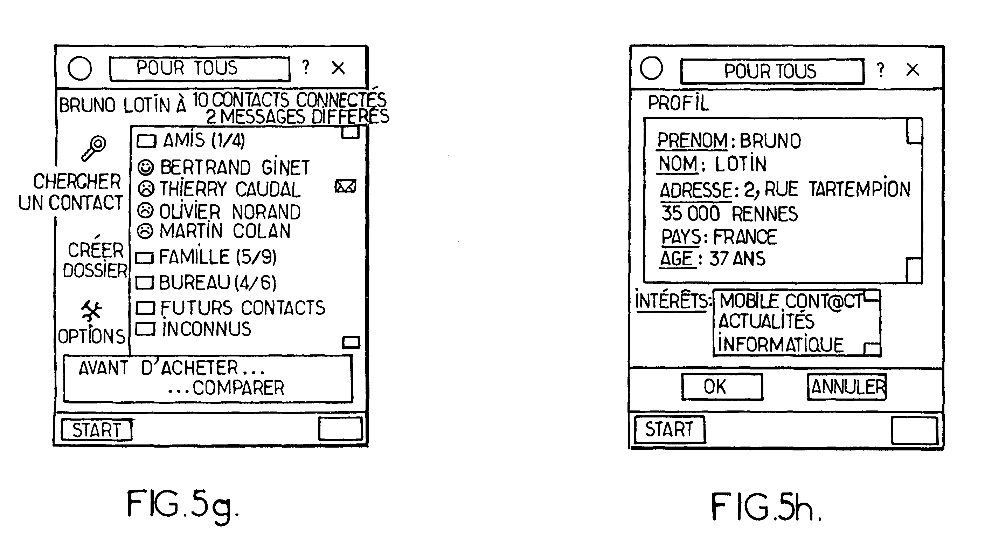

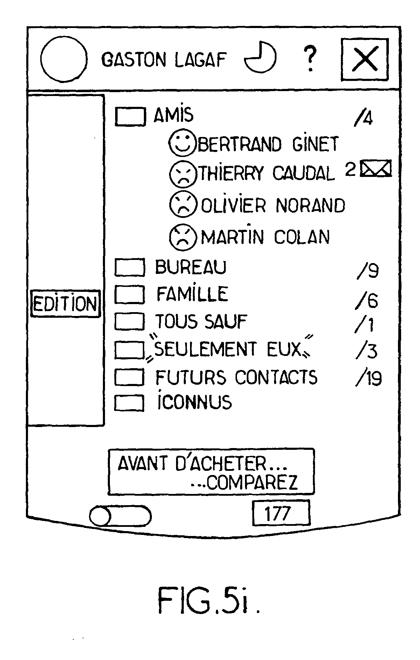

La figure 5g représente, à titre illustratif, une page écran de mise en oeuvre du procédé objet de la présente invention. Ainsi que représenté sur la figure précitée, cette page écran comprend un avertissement selon lequel un ami est connecté, correspondant à un avertissement écrit, un champ d'affichage des répertoires et sous-répertoires conformément au procédé objet de la présente invention, répertoires tels que Ami, Famille, Bureau, Futurs contacts, Inconnus ou autre, et correspondant à des sous-ensembles d'intérêt distinct pour l'utilisateur.

Enfin, des icônes spécifiques permettent d'appeler d'autres pages écrans de création de répertoires, ou création de dossiers, de suppression de dossiers, de recherche de contact, par exemple.

La figure 5h représente une page écran désignée par Profil, permettant en fait de constituer les cartes d'identité publiques, respectivement privées, intégrées au terminal de l'utilisateur. Cette page écran permet d'entrer des champs relatifs à l'identité de l'utilisateur, son âge, son sexe, son adresse personnelle, vis-à-vis de centres d'Intérêts, une ou plusieurs adresses électroniques de courrier électronique notamment.

La figure 5i représente, à titre d'exemple non limitatif, un mode d'affichage spécifique de l'accessibilité ou de la non-accessibilité du terminal utilisateur par différentes adresses électroniques du répertoire Ami. On note en particulier que, de manière spécifique non limitative, l'accessibilité est représentée par une icône de faciès souriant, alors que la non-accessibilité est au contraire représentée par une icône de faciès grincheux.

A titre d'exemple non limitatif, la fonction d'accessibilité privilégiée retenue affichée en surbrillance et correspondant à la fonction SEULEMENT EUX SE sur la figure 5i, peut en outre être représentée par un diagramme de type camembert dont une partie est éclairée, figurant la fonction SEULEMENT EUX, et dont le reste est non éclairé.

On a ainsi décrit un procédé et un système de gestion de l'accessibilité de l'adresse électronique d'un terminal local d'un utilisateur par un ou plusieurs terminaux distants, particulièrement performant dans la mesure où le procédé et le système, objets de l'invention, permettent une gestion efficace et contrôlée de l'accessibilité par tout terminal distant en fonction des disponibilités de l'utilisateur de tout terminal local vis-à-vis de ces terminaux distants.

En particulier, et dans le cadre de la mise en oeuvre du procédé objet de la présente invention, on indique que la procédure d'autorisation d'inscription d'un nouveau terminal distant permet de contrôler efficacement tout risque d'accès intempestif au terminal local correspondant.

Enfin, le procédé et le système, objets de la présente invention, permettent de gérer l'accessibilité de l'adresse électronique d'un terminal local constitué par tout type de terminal, et notamment les terminaux de radiotéléphonie mobile de dernière génération, lesquels permettent, non seulement un accès par l'intermédiaire d'une adresse IP, mais également par l'intermédiaire de tout numéro d'appel téléphonique.


**Revendications**

**1.** Procédé de gestion de l'accessibilité de l'adresse électronique d'un terminal local d'un utilisateur par un ou plusieurs terminaux distants munis chacun d'une adresse électronique, **caractérisé en ce qu'**il consiste :

- à constituer l'ensemble des adresses électroniques de chaque terminal distant en au moins une liste d'adresses électroniques d'interlocuteurs de cet utilisateur ;
- à subdiviser l'ensemble des adresses électroniques en groupes distincts d'adresses électroniques ;
- à attribuer à chaque groupe distinct d'adresses électroniques une fonction d'accessibilité privilégiée spécifique choisie parmi une pluralité de fonctions d'accessibilité privilégiée, chaque fonction d'accessibilité privilégiée présentant un degré d'accessibilité différent du degré d'accessibilité des autres fonctions d'accessibilité de cette pluralité de fonctions d'accessibilité privilégiée, pour constituer des groupes d'adresses électroniques d'accessibilité privilégiée distincte.

**2.** Procédé selon la revendication 1, **caractérisé en ce que** lesdits groupes d'adresses électroniques d'accessibilité privilégiée distincte comportent au moins :

- un groupe TOUS pour lequel, à toutes les adresses électroniques appartenant à ce groupe, est attribué, par l'intermédiaire d'une première fonction d'accessibilité, une accessibilité sans restriction ni réserve à ladite adresse électronique locale ;
- un groupe TOUS SAUF pour lequel, à toutes les adresses électroniques n'appartenant pas à ce groupe, est attribuée, par l'intermédiaire d'une deuxième fonction d'accessibilité, une accessibilité sans restriction ni réserve à ladite adresse électronique locale ;
- un groupe SEULEMENT EUX pour lequel, à toutes les adresses électroniques appartenant à ce groupe, est attribuée, par l'intermédiaire d'une troisième fonction d'accessibilité, une accessibilité sans restriction ni réserve à ladite adresse électronique locale ;
- un groupe PERSONNE pour lequel, à toutes les adresses électroniques appartenant à ce groupe, n'est attribuée, par l'intermédiaire d'une quatrième fonction d'accessibilité, aucune accessibilité à ladite adresse électronique locale.

3. Procédé selon l'une des revendications 1 ou 2, **caractérisé en ce que** celui-ci consiste en outre à constituer l'ensemble desdites adresses électroniques de chaque terminal distant en sous-ensembles d'intérêt distinct pour l'utilisateur, chaque sous-ensemble étant constitué par une sous-liste.

4. Procédé selon l'une des revendications 1 à 3, **caractérisé en ce que** lesdites fonctions d'accessibilité privilégiée spécifique, et lesdits groupes d'adresses électroniques d'accessibilité privilégiée distincte sont complémentés deux à deux.

5. Procédé selon l'une des revendications 1 à 4, **caractérisé en ce que**, à chaque liste ou sous-liste d'adresses électroniques est associé un répertoire et à chaque groupe distinct d'adresses électroniques est associé un sous-répertoire, à chaque sous-répertoire étant associée une fonction d'accessibilité spécifique, à chaque adresse électronique de terminal distant étant attribuée l'accessibilité privilégiée spécifique associée audit sous-répertoire du seul fait de l'appartenance de cette adresse électronique de terminal distant audit répertoire respectivement sous-répertoire.

6. Procédé selon l'une des revendications 1 à 5,**caractérisé en ce que**, à chaque groupe d'accessibilité privilégiée est en outre associé un mode de disponibilité de l'utilisateur dudit terminal local, ledit mode de disponibilité comportant différents degrés de disponibilité affichés à l'attention de tout utilisateur d'un terminal distant, les différents degrés de disponibilité comportant au moins la disponibilité, l'indisponibilité, l'indisponibilité qualifiée.

7. Procédé selon l'une des revendications 1 à 6, **caractérisé en ce que**, à chaque adresse électronique de terminal distant ou local est associé un ensemble d'attributs spécifiques représentatifs de ce terminal distant ou local et de son utilisateur.

8. Procédé selon la revendication 7, **caractérisé en ce que** les attributs spécifiques représentatifs de l'utilisateur d'un terminal comprennent au moins :

- une carte d'identité électronique publique, accessible à partir de toutes les adresses électroniques d'un terminal distant ;
- une carte d'identité électronique privée accessible à partir des seules adresses électroniques d'un terminal distant appartenant à au moins un sous-ensemble d'intérêt distinct pour l'utilisateur.

9. Procédé selon la revendication 7 ou 8, **caractérisé en ce que** lesdits attributs spécifiques représentatifs d'un terminal comprennent au moins :

- un attribut de classe de terminal choisi parmi un groupe de classes de terminal et de leur système d'exploitation, classes de terminal telles que micro-ordinateur, assistant numérique, terminal de téléphonie mobile équipé d'un écran d'affichage ;
- un attribut de niveau de service de communication comportant, pour chaque classe de terminal, des paramètres d'affichage respectivement d'interfaçage de navigation.

10. Système de gestion de l'accessibilité de l'adresse électronique du terminal local d'un utilisateur par un ou plusieurs terminaux distants munis chacun d'une adresse électronique, **caractérisé en ce qu'**il comporte un serveur interactif spécifique connecté en réseau avec lesdits terminaux, ledit serveur interactif comportant au moins :

- un module d'accès frontal permettant une connexion interactive de tout terminal local afin d'assurer à l'initiative de l'utilisateur de ce terminal local une attribution dynamique, à au moins un groupe d'adresses électroniques de plusieurs terminaux distants, d'une fonction d'accessibilité privilégiée et constituer au moins un groupe d'adresses électroniques d'accessibilité privilégiée à l'adresse électronique dudit terminal local ;
- un module de notification, à tout terminal distant dont l'adresse électronique appartient à l'ensemble des adresses électroniques constituant une liste d'adresses électroniques d'interlocuteurs de cet utilisateur et du terminal local de ce dernier, de messages de notification et de mise à jour de l'accessibilité actuelle de l'adresse électronique dudit terminal local par chaque terminal distant.

**11.** Système selon la revendication 10, **caractérisé en ce que** ledit module d'accès frontal comporte en outre, pour tout accès à partir d'un terminal local :

- un module de création de groupes distincts d'adresses électroniques et d'attribution à chaque groupe distinct d'une fonction d'accessibilité privilégiée ; et
- un module de changement d'état de l'accessibilité de l'adresse électronique dudit terminal local par au moins un groupe d'adresses électroniques d'accessibilité privilégiée.

**12.** Terminal muni d'une adresse électronique d'accès, connecté à un réseau électronique auquel sont connectés des terminaux distants munis chacun d'une adresse électronique, **caractérisé en ce que** ledit terminal comporte au moins, mémorisés en mémoire spécifique :

- un ensemble d'adresses électroniques de chaque terminal distant constitué en au moins une liste d'adresses électroniques d'interlocuteurs de l'utilisateur de ce terminal ;
- une pluralité de groupes distincts d'adresses électroniques, ces groupes distincts étant constitués à partir de ladite au moins une liste d'adresses électroniques d'interlocuteurs de l'utilisateur de ce terminal ;
- au moins une fonction d'accessibilité privilégiée spécifique choisie parmi une pluralité de fonctions d'accessibilité privilégiée, chaque fonction d'accessibilité privilégiée présentant un degré d'accessibilité différent du degré d'accessibilité des autres fonctions d'accessibilité de cette pluralité de fonctions d'accessibilité privilégiée, pour constituer des groupes d'adresses électroniques d'accessibilité privilégiée distincte à l'adresse électronique d'accès à ce terminal.

**13.** Terminal selon la revendication 12, **caractérisé en ce que** lesdits groupes d'adresses électroniques d'accessibilité distincte à l'adresse électronique d'accès à ce terminal comprennent au moins :

- un groupe TOUS pour lequel, à toutes les adresses électroniques appartenant à ce groupe, est attribuée, par l'intermédiaire d'une première fonction d'accessibilité, une accessibilité sans restriction ni réserve à l'adresse électronique d'accès dudit terminal ;
- un groupe TOUS SAUF pour lequel, à toutes les adresses électroniques n'appartenant pas à ce groupe, est attribuée, par l'intermédiaire d'une deuxième fonction d'accessibilité, une accessibilité sans restriction ni réserve à l'adresse électronique d'accès dudit terminal ;
- un groupe SEULEMENT EUX pour lequel, à toutes les adresses électroniques appartenant à ce groupe, est attribuée, par l'intermédiaire d'une troisième fonction d'accessibilité, une accessibilité sans restriction ni réserve à l'adresse électronique d'accès dudit terminal ;
- un groupe PERSONNE pour lequel, à toutes les adresses électroniques appartenant à ce groupe, n'est attribuée, par l'intermédiaire d'une quatrième fonction d'accessibilité, aucune accessibilité à l'adresse électronique d'accès dudit terminal.

**14.** Terminal selon la revendication 12 ou 13, **caractérisé en ce que** celui-ci comporte en outre, mémorisés en mémoire spécifique, une pluralité de sous-ensembles d'adresses électroniques de terminaux distants, chaque sous-ensemble étant constitué en un sous-ensemble d'intérêt distinct pour l'utilisateur et formé par une sous-liste de ladite au moins une liste d'adresses électroniques d'interlocuteurs de l'utilisateur de ce terminal.

**15.** Terminal selon l'une des revendications 12 à 14, **caractérisé en ce que** les ensembles et sous-ensembles d'adresses électroniques de terminaux distants sont organisés en répertoires et **en ce que** les groupes distincts sont organisés en sous-répertoires, à chaque sous-répertoire étant associée une fonction d'accessibilité spécifique, à chaque adresse électronique de terminal distant étant attribuée l'accessibilité privilégiée spécifique associée audit sous-répertoire du seul fait de l'appartenance de cette adresse électronique de terminal distant audit sous-répertoire.

**16.** Terminal selon l'une des revendications 12 à 15, **caractérisé en ce que**, ce terminal étant constitué par un micro-ordinateur, la mémoire spécifique est la mémoire de masse de ce micro-ordinateur.

**17.** Terminal selon l'une des revendications 12 à 15, **caractérisé en ce que**, ce terminal étant constitué par un assistant numérique ou un terminal de téléphonie mobile équipé d'un écran d'affichage, ladite mémoire spécifique est la mémoire non volatile dudit terminal.

**18.** Terminal selon la revendication 17, **caractérisé en ce que**, ledit terminal étant constitué par un terminal de téléphonie mobile, celui-ci comporte en outre, mémorisé en mémoire non volatile de ce terminal, un logiciel spécifique d'interfaçage graphique permettant l'affichage desdits répertoires et sous-répertoires contenant lesdits ensembles, respectivement sous-ensembles ou groupes d'adresses électroniques de terminaux distants.

**19.** Terminal selon l'une des revendications 12 à 15, **caractérisé en ce que** ce terminal étant constitué par un terminal de téléphonie mobile, celui-ci comporte en outre :

- une liste des numéros d'appel téléphonique des terminaux distants constitués par un terminal de téléphonie mobile, cette liste des numéros d'appel comportant au moins les numéros d'appel téléphonique des terminaux de téléphonie mobile dont l'adresse électronique d'accès au réseau IP appartient à la liste des interlocuteurs de l'utilisateur de ce terminal, jouant le rôle de terminal local ; et
- des moyens de redirection de l'appel téléphonique émanant de l'un des numéros d'appel téléphonique appartenant à ladite liste des numéros d'appel téléphonique, soit lorsque le terminal distant ne comporte pas d'adresse électronique d'accès au réseau IP, soit lorsque l'utilisateur de ce terminal distant et ce terminal distant ne sont pas habilités à mettre en oeuvre le procédé selon l'une des revendications 1 à 9, ou encore lorsque l'utilisateur de ce terminal distant et ce terminal distant sont habilités à mettre en oeuvre le procédé de gestion selon l'une des revendications 1 à 9 mais que l'utilisateur de ce terminal, jouant le rôle de terminal local, s'est déclaré indisponible selon un mode d'indisponibilité ou d'indisponibilité qualifiée vis-à-vis de l'utilisateur de ce terminal distant.

**Claims**

**1.** A method of managing the accessibility of the electronic address of a local terminal of a user by one or more remote terminals each furnished with an electronic address, **characterized in that** it consists:

- in compiling the set of electronic addresses of each remote terminal into at least one list of electronic addresses of counterparts of this user;
- in subdividing the set of electronic addresses into distinct groups of electronic addresses;
- in allocating each distinct group of electronic addresses a specific privileged accessibility function chosen from among a plurality of privileged accessibility functions, each privileged accessibility function exhibiting a different degree of accessibility from the degree of accessibility of the other accessibility functions of this plurality of privileged accessibility functions, so as to compile groups of electronic addresses of distinct privileged accessibility.

**2.** The method as claimed in claim 1, **characterized in that** said groups of electronic addresses of distinct privileged accessibility comprise at least:

- an ALL group for which restrictionless unreserved accessibility to said local electronic address is allocated, by way of a first accessibility function, to all the electronic addresses belonging to this group;
- an ALL EXCEPT group for which restrictionless unreserved accessibility to said local electronic address is allocated, by way of a second accessibility function, to all the electronic addresses not belonging to this group;
- an ONLY THEM group for which restrictionless unreserved accessibility to said local electronic address is allocated, by way of a third accessibility function, to all the electronic addresses belonging to this group;
- a NOBODY group for which no accessibility to said local electronic address is allocated, by way of a fourth accessibility function, to all the electronic addresses belonging to this group.

**3.** The method as claimed in one of claims 1 or 2, **characterized in that** it consists furthermore in compiling the set of said electronic addresses of each remote terminal into subsets of distinct interest to the user, each subset consisting of a sub-list.

4. The method as claimed in one of claims 1 to 3, **characterized in that** said functions of specific privileged accessibility, and said groups of electronic addresses of distinct privileged accessibility are pairwise complemented.

5. The method as claimed in one of claims 1 to 4, **characterized in that**, with each list or sub-list of electronic addresses is associated a directory and with each distinct group of electronic addresses is associated a subdirectory, with each subdirectory there being associated a specific accessibility function, to each remote terminal electronic address there being allocated the specific privileged accessibility associated with said subdirectory solely because this remote terminal electronic address belongs to said directory respectively subdirectory.

6. The method as claimed in one of claims 1 to 5, **characterized in that**, with each privileged accessibility group is further associated a mode of availability of the user of said local terminal, said mode of availability comprising various degrees of availability displayed for the attention of any user of a remote terminal, the various degrees of availability comprising at least availability, unavailability, qualified unavailability.

7. The method as claimed in one of claims 1 to 6, **characterized in that**, with each remote or local terminal electronic address is associated a set of specific attributes representative of this remote or local terminal and of its user.

8. The method as claimed in claim 7, **characterized in that** the specific attributes representative of the user of a terminal comprise at least:

   - a public electronic identity card, accessible from all the electronic addresses of a remote terminal;
   - a private electronic identity card accessible from only those electronic addresses of a remote terminal belonging to at least one subset of distinct interest to the user.

9. The method as claimed in claim 7 or 8, **characterized in that** said specific attributes representative of a terminal comprise at least:

   - a terminal class attribute chosen from among a group of classes of terminal and of their operating system, classes of terminal such as microcomputer, digital assistant, mobile telephony terminal equipped with a display screen;
   - a communication service level attribute comprising, for each class of terminal, parameters regarding display respectively interfacing of navigation.

10. A system for managing the accessibility of the electronic address of the local terminal of a user by one more remote terminals each furnished with an electronic address, **characterized in that** it comprises a specific interactive server networked with said terminals, said interactive server comprising at least:

    - a front-end access module allowing interactive logon of any local terminal so as to effect on the initiative of the user of this local terminal a dynamic allocation, to at least one group of electronic addresses of several remote terminals, of a privileged accessibility function and to compile at least one group of electronic addresses of privileged accessibility to the electronic address of said local terminal;
    - a module for notification, to any remote terminal whose electronic address belongs to the set of electronic addresses constituting a list of electronic addresses of counterparts of this user and of the local terminal of the latter, of messages for notification and for updating of the current accessibility of the electronic address of said local terminal by each remote terminal.

11. The system as claimed in claim 10, **characterized in that** said front-end access module further comprises, for any access from a local terminal:

    - a module for creating distinct groups of electronic addresses and for allocating a privileged accessibility function to each distinct group; and
    - a module for changing state of the accessibility of the electronic address of said local terminal by at least one group of electronic addresses of privileged accessibility.

12. A terminal furnished with an electronic access address, connected to an electronic network to which remote terminals each furnished with an electronic address are connected, **characterized in that** said terminal comprises at least, stored in specific memory:

- a set of electronic addresses of each remote terminal compiled into at least one list of electronic addresses of counterparts of the user of this terminal;
- a plurality of distinct groups of electronic addresses, these distinct groups being compiled from said at least one list of electronic addresses of counterparts of the user of this terminal;
- at least one specific privileged accessibility function chosen from among a plurality of privileged accessibility functions, each privileged accessibility function exhibiting a different degree of accessibility from the degree of accessibility of the other accessibility functions of this plurality of privileged accessibility functions, so as to compile groups of electronic addresses of distinct privileged accessibility to the electronic access address of this terminal.

**13.** The terminal as claimed in claim 12, **characterized in that** said groups of electronic addresses of distinct accessibility to the electronic address for access to this terminal comprise at least:

- an ALL group for which restrictionless unreserved accessibility to the electronic access address of said terminal is allocated, by way of a first accessibility function, to all the electronic addresses belonging to this group;
- an ALL EXCEPT group for which restrictionless unreserved accessibility to the electronic access address of said terminal is allocated, by way of a second accessibility function, to all the electronic addresses not belonging to this group;
- an ONLY THEM group for which restrictionless unreserved accessibility to the electronic access address of said terminal is allocated, by way of a third accessibility function, to all the electronic addresses belonging to this group;
- a NOBODY group for which no accessibility to the electronic access address of said terminal is allocated, by way of a fourth accessibility function, to all the electronic addresses belonging to this group.

**14.** The terminal as claimed in claim 12 or 13, **characterized in that** it furthermore comprises, stored in specific memory, a plurality of subsets of electronic addresses of remote terminals, each subset being compiled as a subset of distinct interest to the user and formed by a sub-list of said at least one list of electronic addresses of counterparts of the user of this terminal.

**15.** The terminal as claimed in one of claims 12 to 14, **characterized in that** the sets and subsets of electronic addresses of remote terminals are organized into directories and **in that** the distinct groups are organized into subdirectories, with each subdirectory there being associated a specific accessibility function, to each remote terminal electronic address there being allocated the specific privileged accessibility associated with said subdirectory solely because this remote terminal electronic address belongs to said subdirectory.

**16.** The terminal as claimed in one of claims 12 to 15, **characterized in that**, this terminal consisting of a microcomputer, the specific memory is the mass memory of this microcomputer.

**17.** The terminal as claimed in one of claims 12 to 15, **characterized in that**, this terminal consisting of a digital assistant or a mobile telephony terminal equipped with a display screen, said specific memory is the nonvolatile memory of said terminal.

**18.** The terminal as claimed in claim 17, **characterized in that**, said terminal consisting of a mobile telephony terminal, the latter further comprises, stored in nonvolatile memory of this terminal, a specific piece of software for graphical interfacing allowing the displaying of said directories and subdirectories containing said sets, respectively subsets or groups of electronic addresses of remote terminals.

**19.** The terminal as claimed in one of claims 12 to 15, **characterized in that** this terminal consisting of a mobile telephony terminal, the latter furthermore comprises:

- a list of the telephone call numbers of the remote terminals consisting of a mobile telephony terminal, this list of the call numbers comprising at least the telephone call numbers of the mobile telephony terminals whose electronic address for access to the IP network belongs to the list of counterparts of the user of this terminal, playing the role of local terminal; and
- means of redirection of the telephone call emanating from one of the telephone call numbers belonging to said list of telephone call numbers, either when the remote terminal comprises no electronic address for access to the IP network, or when the user of this remote terminal and this remote terminal are not entitled to implement the method as claimed in one of claims 1 to 9, or else when the user of this remote terminal and this remote terminal are entitled to implement the method of management as claimed in one of claims 1 to 9 but the user of this terminal, playing the role of local terminal, has declared himself unavailable according to a mode of unavailability or of qualified unavailability in relation to the user of this remote terminal.

**Patentansprüche**

1. Verfahren zur Verwaltung der Zugänglichkeit der elektronischen Adresse eines lokalen Terminals eines Benutzers für ein oder mehrere jeweils mit einer elektronischen Adresse versehene entfernte Endgeräte, **dadurch gekennzeichnet, dass** es darin beruht:

   - die Gesamtheit der elektronischen Adressen jedes entfernten Endgerätes in wenigstens einer Liste von elektronischen Adressen von Gesprächspartnern dieses Benutzers zusammenzustellen;

   - die Gesamtheit der elektronischen Adressen in einzelne Gruppen von elektronischen Adressen aufzuteilen;

   - jeder einzelnen Gruppe von elektronischen Adressen eine privilegierte Zugänglichkeitsfunktion zuzuweisen, die aus einer Mehrzahl von privilegierten Zugänglichkeitsfunktionen ausgewählt wird, wobei jede privilegierte Zugänglichkeitsfunktion einen anderen Grad von Zugänglichkeit aufweist als die anderen Zugänglichkeitsfunktionen dieser Mehrzahl von privilegierten Zugänglichkeitsfunktionen, um Gruppen von elektronischen Adressen mit unterschiedlicher privilegierter Zugänglichkeit zu bilden.

2. Verfahren nach Anspruch 1, **dadurch gekennzeichnet, dass** die Gruppen von elektronischen Adressen mit unterschiedlicher privilegierter Zugänglichkeit wenigstens umfassen:

   - eine Gruppe "ALLE", bei der allen zu dieser Gruppe gehörenden Adressen über eine erste Zugänglichkeitsfunktion eine Zugänglichkeit der lokalen elektronischen Adresse ohne Einschränkung und ohne Vorbehalt zugeordnet ist;

   - eine Gruppe "ALLE AUSSER", bei der allen nicht zu dieser Gruppe gehörenden elektronischen Adressen über eine zweite Zugänglichkeitsfunktion eine Zugänglichkeit der lokalen elektronischen Adresse ohne Einschränkung und ohne Vorbehalt zugeordnet ist;

   - eine Gruppe "NUR DIESE", bei der allen zu dieser Gruppe gehörenden elektronischen Adressen über eine dritte Zugänglichkeitsfunktion eine Zugänglichkeit der lokalen elektronischen Adresse ohne Einschränkung und ohne Vorbehalt zugeordnet ist;

   - eine Gruppe "NIEMAND", bei der allen zu dieser Gruppe gehörenden elektronischen Adressen über eine vierte Zugänglichkeitsfunktion keine Zugänglichkeit der lokalen elektronischen Adresse zugeordnet wird.

3. Verfahren nach einem der Ansprüche 1 oder 2, **dadurch gekennzeichnet, dass** es ferner darin beruht, die Gesamtheit der elektronischen Adressen jedes entfernten Endgeräts als Untergesamtheiten von unterschiedlichem Interesse für den Benutzer aufzustellen, wobei jede Untergesamtheit durch eine Unterliste gebildet ist.

4. Verfahren nach einem der Ansprüche 1 bis 3, **dadurch gekennzeichnet, dass** die Funktionen mit spezifischer privilegierter Zugänglichkeit und die Gruppen von elektronischen Adressen mit unterschiedlicher privilegierter Zugänglichkeit paarweise komplementiert werden.

5. Verfahren nach einem der Ansprüche 1 bis 4, **dadurch gekennzeichnet, dass** jeder Liste oder Unterliste von elektronischen Adressen ein Verzeichnis und jeder einzelnen Gruppe von elektronischen Adressen ein Unterverzeichnis zugeordnet wird, wobei jedem Unterverzeichnis eine spezifische Zugänglichkeitsfunktion zugeordnet wird, jeder elektronischen Adresse eines entfernten Terminals die diesem Unterverzeichnis zugeordnete spezifische privilegierte Zugänglichkeit allein aufgrund der Zugehörigkeit dieser elektronischen Adresse eines entfernten Endgeräts zu dem Verzeichnis bzw. Unterverzeichnis zugeordnet wird.

6. Verfahren nach einem der Ansprüche 1 bis 5, **dadurch gekennzeichnet, dass** jeder Gruppe mit privilegierter Zugänglichkeit ferner ein Verfügbarkeitsmodus des Benutzers des lokalen Terminals zugeordnet wird, wobei der Verfügbarkeitsmodus unterschiedliche, jedem Benutzer eines entfernten Endgeräts angezeigte Verfügbarkeitsgrade umfasst, wobei die unterschiedlichen Verfügbarkeitsgrade wenigstens die Verfügbarkeit, die Nichtverfügbarkeit und die qualifizierte Nichtverfügbarkeit umfassen.

7. Verfahren nach einem der Ansprüche 1 bis 6, **dadurch gekennzeichnet, dass** jeder elektronischen Adresse eines entfernten oder lokalen Terminals eine Gesamtheit von für dieses entfernte oder lokale Terminal und seinen Benutzer repräsentativen spezifischen Attributen zugeordnet wird.

8. Verfahren nach Anspruch 7, **dadurch gekennzeichnet, dass** die für den Benutzer eines Terminals repräsentativen spezifischen Attribute wenigstens umfassen:

   - einen öffentlichen elektronischen Ausweis, der von allen elektronischen Adressen eines entfernten Endgeräts aus zugänglich ist;
   - einen privaten elektronischen Ausweis, der nur von den elektronischen Adressen eines entfernten Endgeräts aus zugänglich ist, das zu wenigstens einer Untergesamtheit mit erhöhtem Interesse für den Benutzer gehört.

9. Verfahren nach Anspruch 7 oder 8, **dadurch gekennzeichnet, dass** die für ein Terminal repräsentativen spezifischen Attribute wenigstens umfassen:

   - ein Terminal-Klassenattribut, das unter einer Gruppe von Terminalklassen und ihrem Betriebssystem, Terminalklassen wie etwa Mikrocomputer, digitaler Assistent, Mobiltelefon mit Anzeigeschirm, ausgewählt ist;

   - ein Kommunikationsdienst-Niveauattribut, welches für jede Klasse von Terminal Anzeige- bzw. Navigationsschnittstellenparameter umfasst.

10. System zur Verwaltung der Zugänglichkeit der elektronischen Adresse des lokalen Terminals eines Benutzers für ein oder mehrere jeweils mit einer elektronischen Adresse versehene entfernte Terminals, **dadurch gekennzeichnet, dass** es einen mit den Terminals zu einem Netz verbundenen spezifischen interaktiven Server umfasst, wobei der interaktive Server wenigstens umfasst:

   - ein Frontalzugangsmodul, das eine interaktive Verbindung jedes lokalen Terminals ermöglicht, um auf Initiative des Benutzers dieses lokalen Terminals eine dynamische Zuweisung einer privilegierten Zugänglichkeitsfunktion zu wenigstens einer Gruppe von elektronischen Adressen von mehreren entfernten Endgeräten zu ermöglichen und wenigstens eine Gruppe von elektronischen Adressen mit privilegierter Zugänglichkeit der elektronischen Adresse des lokalen Terminals zu bilden;
   - ein Benachrichtigungsmodul zum Benachrichtigen jedes entfernten Terminals, dessen elektronische Adresse zur Gesamtheit der elektronischen Adressen gehört, die eine Liste von elektronischen Adressen von Gesprächspartnern dieses Benutzers und des lokalen Terminals des letzteren bilden, mit Meldungen zur Benachrichtigung und Aktualisierung der aktuellen Zugänglichkeit der elektronischen Adresse des lokalen Terminals für jedes entfernte Terminal.

11. System nach Anspruch 10, **dadurch gekennzeichnet, dass** das Frontalzugangsmodul ferner für jeden Zugang von einem lokalen Terminal aus umfasst:

   - ein Modul zur Erzeugung von einzelnen Gruppen von elektronischen Adressen und zum Zuordnen einer privilegierten Zugänglichkeitsfunktion zu jeder einzelnen Gruppe; und

   - ein Modul zum Ändern des Zugänglichkeitszustandes der elektronischen Adresse des lokalen Terminals für wenigstens eine Gruppe von elektronischen Adressen mit privilegierter Zugänglichkeit.

12. Terminal mit einer elektronischen Zugangsadresse, angeschlossen an ein elektronisches Netz, an das mit jeweils einer elektronischen Adresse versehene entfernte Terminals angeschlossen sind, **dadurch gekennzeichnet, dass** das Terminal wenigstens, in einem spezifischen Speicher gespeichert, aufweist:

   - eine Gesamtheit von elektronischen Adressen jedes entfernten Endgeräts, die wenigstens durch eine Liste von elektronischen Adressen von Gesprächspartnern des Benutzers dieses Terminals gebildet ist;

   - eine Mehrzahl von einzelnen Gruppen von elektronischen Adressen, wobei diese einzelnen Gruppen ausgehend von der wenigstens einen Liste von elektronischen Adressen von Gesprächspartnern des Benutzers dieses Endgeräts gebildet sind;

- wenigstens eine spezifische privilegierte Zugänglichkeitsfunktion, die aus einer Mehrzahl von privilegierten Zugänglichkeitsfunktionen ausgewählt ist, wobei jede privilegierte Zugänglichkeitsfunktion einen privilegierten Zugänglichkeitsgrad aufweist, der vom Zugänglichkeitsgrad der anderen Zugänglichkeitsfunktionen aus dieser Mehrzahl von privilegierten Zugänglichkeitsfunktionen verschieden ist, um Gruppen von elektronischen Adressen mit unterschiedlicher privilegierter Zugänglichkeit der elektronischen Zugangsadresse zu diesem Terminal zu bilden.

13. Terminal nach Anspruch 12, **dadurch gekennzeichnet, dass** die Gruppen von elektronischen Adressen mit unterschiedlicher Zugänglichkeit der elektronischen Zugangsadresse zu diesem Terminal wenigstens umfassen:

- eine Gruppe "ALLE", für die allen zu dieser Gruppe gehörenden elektronischen Adressen über eine erste Zugänglichkeitsfunktion eine uneingeschränkte und vorbehaltlose Zugänglichkeit der elektronischen Zugangsadresse des Terminals zugewiesen wird;

- eine Gruppe "ALLE OHNE", für die allen nicht zu dieser Gruppe gehörenden elektronischen Adressen über eine zweite Zugänglichkeitsfunktion eine uneingeschränkte und vorbehaltlose Zugänglichkeit der elektronischen Zugangsadresse des Terminals zugewiesen wird;

- eine Gruppe "NUR DIESE", für die bei allen zu dieser Gruppe gehörenden elektronischen Adressen über eine dritte Zugänglichkeitsfunktion eine Zugänglichkeit der lokalen elektronischen zugangsadresse des Terminals ohne Einschränkung und ohne Vorbehalt zugewiesen wird;

- eine Gruppe "NIEMAND", bei der allen zu dieser Gruppe gehörenden elektronischen Adressen über eine vierte Zugänglichkeitsfunktion keine Zugänglichkeit der elektronischen Zugangsadresse dieses Terminals zugewiesen wird.

14. Terminal nach Anspruch 12 oder 13, **dadurch gekennzeichnet, dass** es ferner in einem spezifischen Speicher gespeichert eine Mehrzahl von Untergesamtheiten von elektronischen Adressen von entfernten Endgeräten aufweist, wobei jede Untergesamtheit durch eine Untergesamtheit mit unterschiedlichem Interesse für den Benutzer und durch eine Unterliste der wenigstens einen Liste von elektronischen Adressen von Gesprächspartnern des Benutzers dieses Endgeräts gebildet ist.

15. Endgerät nach einem der Ansprüche 12 bis 14, **dadurch gekennzeichnet, dass** die Gesamtheiten und Untergesamtheiten von elektronischen Adressen von entfernten Endgeräten in Verzeichnissen organisiert sind, und dass die einzelnen Gruppen in Unterverzeichnissen organisiert sind, wobei jedem Unterverzeichnis eine spezifische Zugänglichkeitsfunktion zugeordnet ist, jeder elektronischen Adresse eines entfernten Endgeräts die dem Unterverzeichnis zugeordnete spezifische privilegierte Zugänglichkeit allein aufgrund der Zugehörigkeit dieser elektronischen Adresse eines entfernten Terminals zu dem Unterverzeichnis zugewiesen ist.

16. Terminal nach einem der Ansprüche 12 bis 15, **dadurch gekennzeichnet, dass**, wenn das Terminal durch einen Mikrocomputer gebildet ist, der spezifische Speicher der Massenspeicher dieses Mikrocomputers ist.

17. Terminal nach einem der Ansprüche 12 bis 15, **dadurch gekennzeichnet**, wenn dieses Terminal durch einen digitalen Assistenten oder ein mit einem Anzeigeschirm ausgestattetes Mobiltelefonterminal gebildet ist, der spezifische Speicher der nichtflüchtige Speicher des Endgerätes ist.

18. Terminal nach Anspruch 17, **dadurch gekennzeichnet, dass**, wenn das Terminal durch ein Mobiltelefonie-Terminal gebildet ist, dieses ferner, im nichtflüchtigen Speicher dieses Terminals gespeichert, ein spezifisches graphisches Schnittstellenprogramm aufweist, das die.Anzeige der Verzeichnisse und Unterverzeichnisse ermöglicht, die die besagten Gesamtheiten bzw. Untergesamtheiten oder Gruppen von elektronischen Adressen von entfernten Terminals enthalten.

19. Terminal nach einem der Ansprüche 12 bis 15, **dadurch gekennzeichnet, dass** dieses Terminal durch ein Mobiltelefonie-Terminal gebildet ist und dieses ferner umfasst:

- eine Liste der telefonischen Rufnummern von durch ein Mobiltelefonie-Terminal gebildeten Terminals, wobei diese Liste der Rufnummern wenigstens die telefonischen Rufnummern der Mobiltelefonie-Endgeräte umfasst, deren elektronische Zugangsadresse zum Netz IP zu der Liste von Gesprächspartnern des Benutzers dieses Terminals gehören, das die Rolle des lokalen Terminals spielt; und

- Mittel zum Umleiten des von einer der zu der Liste von Telefonrufnummern gehörenden Telefonrufnummern herrührenden Telefonanrufe, entweder wenn das entfernte Terminal keine elektronische Zugangsadresse zum Netz IP hat, oder wenn der Benutzer dieses entfernten Terminals und das entfernte Terminal nicht in der Lage sind, das Verfahren nach einem der Ansprüche 1 bis 9 auszuführen, oder wenn der Benutzer dieses entfernten Terminals und dieses entfernte Terminal in der Lage sind, das Verwaltungsverfahren nach einem der Ansprüche 1 bis 9 durchzuführen, der Benutzer dieses die Rolle des lokalen Terminals spielenden Terminals sich aber in einem Nichtverfügbarkeitsmodus oder einem in Bezug auf den Benutzer dieses entfernten Endgeräts qualifizierten Nichtverfügbarkeitsmodus für nichtverfügbar erklärt hat.

FIG.1a.

FIG.1b.

FIG.1c.

FIG.1d.

FIG.2a.

UTILISATEUR A
MODE DE DISPONIBILITÉ :

. DISPONIBLE ☺
INDISPONIBLE X
"TRAVAIL":
B ☺
C X
D ☺
"FAMILLE":
E ☺
F X
G X

FIG.2b.

UTILISATEUR B
MODE DE DISPONIBILITÉ :

DISPONIBLE ☺
INDISPONIBLE X
"TRAVAIL":
A ☺
C X
D ☺
"AMIS":
T ☺
U X
V X

UTILISATEUR A
MODE DE DISPONIBILITÉ :

DISPONIBLE ☺
INDISPONIBLE X
"TRAVAIL":
B ☺
C X
D ☺
"FAMILLE":
E ☺
F X
G X
"RÉUNION":

UTILISATEUR E
MODE DE DISPONIBILITÉ :

DISPONIBILE ☺
INDISPONIBLE X
"FAMILLE":
A ☺
K X
M ☺
"AMIS":
R ☺
S X
Q X

# FIG.2c.

UTILISATEUR B
MODE DE DISPONIBILITÉ:
  DISPONIBLE ☺
  INDISPONIBLE X
"TRAVAIL":
A  X "RÉUNION"
C  X
D  ☺
"AMIS":
T  ☺
U  X

UTILISATEUR A
MODE DE DISPONIBILITÉ:
  DISPONIBILE ☺
  INDISPONIBLE X
  EN RÉUNION X "RÉUNION"

"TRAVAIL":
B  ☺
C  X
D  ☺
"FAMILLE":
E  ☺
F  X
G  X
"RÉUNION":
"TRAVAIL"

UTILISATEUR E
MODE DE DISPONIBILITÉ:
  DISPONIBILE ☺
  INDISPONIBLE X
"FAMILLE":
A  ☺
K  X
M  ☺
"AMIS":
R  ☺
S  X
Q  X

PIERRE CORNEILLE   NE PAS
                   DÉRANGER                    ──ICPR
RUE DU CID  35000  RENNES
02 99 87 65 43
P. CORNEILLE @ VOILÀ . FR
FTRD  CESSON—SÉVIGNÉ                           ──ICPU
06 07 08 09 10
CHOIX                     RETOUR

# FIG.2d.

5 ― B D
P.A.U

1

SERVEUR

2

MODULE
FRONTAL

BD
UTILISATEURS

UTILISATEUR A:(LOCAL)

MODULE DE
NOTIFICATION

4

3

UTILISATEUR B:
(DISTANT)

UTILISATEUR C: (DISTANT)

FIG.3a.

$E_0$ — RENSEIGNER LES GROUPES
ET SOUS ENSEMBLES

$E_1$ — CHANGEMENT D'ÉTAT DE
DISPONIBILITÉ DE L'UTILISATEUR

FIG.3c.

$E_2$ — NOTIFICATION DE DISPONIBILITÉ
DE L'UTILISATEUR TERMINAL
(LOCAL) AUX AUTRES UTILISATEURS
TERMINAL (DISTANT)

$E_3$ — APPEL DU TERMINAL D'UN
AUTRE UTILISATEUR SI ACCESSIBLE

EP 1 330 752 B1

```
┌─────────────────────────────────────────┐
│    ┌───────────────────────────┐    ╲2   │
│ 20─│  MODULES  DE CRÉATION     │         │
│    │      DE  GROUPES          │         │
│    └───────────────────────────┘         │
│                 ↕                        │
│    ┌───────────────────────────┐         │
│ 21─│ MODULE  DE CHANGEMENT     │         │
│    │ D'ÉTAT  D'ACCESSIBILITÉ   │         │
│    └───────────────────────────┘         │
└─────────────────────────────────────────┘
```

FIG. 3b. MODULE FRONTAL

FIG.4a. CONNEXION ET NOTIFICATION (UMTS)

EP 1 330 752 B1

| TERMINAL A | UMTS | H L R | FRONTAL | NOTIFIEUR | BASE DE DONNÉES SERVICES | PAU | RÉSEAU UMTS OU INTERNET | TERMINAL B |

MODIFICATION DES LISTES DE CONTACTS

M12

AJOUTER, MODIFIER, SUPPRIMER
(RÉPERTOIRES OU CONTACTS)

M13

RENVOI
DES INFOS    M14

FIG.4b . MODIFICATION DES LISTES DE CONTACTS
(ADRESSES ÉLECTRONIQUES) (UMTS)

| TERMINAL A | UMTS | H L R | FRONTAL | NOTIFIEUR | BASE DE DONNÉES SERVICES | PAU | RÉSEAU UMTS OU INTERNET | TERMINAL B |

MODIFICATION DE L'ACCESSIBILITÉ

M15

MODIFIER ÉTAT DANS LA TABLE
DES DISPONIBILITÉ    M16

NOTIFIER LES
CONTACTS    M17

FIG.4c . MODIFICATION DE L'ACCESSIBILITÉ (DISPONIBILITÉ) (UMTS)

FIG.4d .MODIFICATION DES LISTES DE CONTACTS (ADRESSES ÉLECTRONIQUES) AVEC AUTORISATION ET RÉPONSE (UMTS)

## FIG.5a.

LI

(G1,TOUS)    (G2 , TS.)    (G3 , SE)    (G4,PERSONNE)

GA1      GA2      GA3      GA4

## FIG.5b.

LI

(G1,TOUS)    (G2,TS)    (G3,SE)    (G4,PERSONNE)

GA1      GA2      GA3      GA4

EP 1 330 752 B1

**FIG.5c.**

$$LI = \begin{bmatrix} xxx, xxx, xxx, AD_1, AD_2, \cdots, AD_i, AD_N \end{bmatrix} = \begin{bmatrix} AD_k \end{bmatrix}_1^N$$

$$NI = \begin{bmatrix} 001, 002, 005, 004, 008, \cdots, 007, 006 \end{bmatrix} = \begin{bmatrix} ND_k \end{bmatrix}_1^N$$

(G1,TOUS)  (G2,TS)  (G3,SE)  (G4,PERSONNE)

**FIG.5d.**

NB APPELLE NA,ADa — S

NB∈N_I — T1 —

ND_k ↓ k

AD_k — L

AD_k=xxx — T2 +

ADa INDISPONIBLE QUALIFIÉ POUR AD_k — T3 +

REDIRECTION D'APPEL VERS UN NUMÉRO D'APPEL SPECIFIQUE — R

EXÉCUTION DU PROCÉDÉ — P

CPU  RAM  REDIRECTION D'APPEL  MÉMOIRE NON VOLATILE  HZ

35

## FIG.5e

POUR TOUS   ?   ✕

GÉNÉRAL
○ LANCEMENT AUTOMATIQUE DE MOBILE CONT@CT
○ MÉMORISER LE NOM DE L'UTILI- SATEUR ET LE MOT DE PASSE
ME PREVENIR LORSQU'UN CONTACT CHANGE DE DISPONIBILITÉ.
     ○ AVEC UN SON
       ○ AVEC UN MESSAGE
PROTECTION
○ JE VEUX POUVOIR CHOISIR
○ TOUS PEUVENT ME CONTACTER

CHANGEMENT D'UTILISATEUR

OK     ANNULER

START

## FIG.5f.

POUR TOUS   ?   ✕

CONNEXION

○ J'UTILISE LE RÉSEAU UMTS POUR ME CONNECTER À INTERNET
○ JE SUIS CONNECTÉ À UN RÉSEAU LOCAL AVEC UN PROXY

INFORMATIONS RELATIVES À LA SÉLECTION CI-DESSUS

OK     ANNULER

START

EP 1 330 752 B1

**FIG.5g.**

POUR TOUS   ?   ✕

BRUNO LOTIN À 10 CONTACTS CONNECTÉS
2 MESSAGES DIFFÉRÉS

CHERCHER
UN CONTACT

CRÉER
DOSSIER

OPTIONS

☐ AMIS (1/4)
☺ BERTRAND GINET
☹ THIERRY CAUDAL ✉
☹ OLIVIER NORAND
☹ MARTIN COLAN
☐ FAMILLE (5/9)
☐ BUREAU (4/6)
☐ FUTURS CONTACTS
☐ INCONNUS

AVANT D'ACHETER...
...COMPARER

START

**FIG.5h.**

POUR TOUS   ?   ✕

PROFIL

PRENOM: BRUNO
NOM: LOTIN
ADRESSE: 2, RUE TARTEMPION
35 000 RENNES
PAYS: FRANCE
AGE: 37 ANS

INTÉRÊTS: MOBILE CONT@CT
ACTUALITÉS
INFORMATIQUE

OK          ANNULER

START

FIG.5i.